# EUROPÄISCHE PATENTSCHRIFT

(11) **EP 1 195 245 B1**
(45) Veröffentlichungstag und Bekanntmachung des Hinweises auf die Patenterteilung: **06.10.2010**
(21) Anmeldenummer: 01118689.7
(22) Anmeldetag: 03.08.2001
(51) Int. Cl.: B41F 13/00, B65G 1/137

(54) **Druckhülsenmanagement-System, Verfahren zur Einlagerung von Hülsen für Rotationsdruckmaschinen und Gummizylinderhülse einer Rotationsdruckmaschine**
Printing sleeves management system, method for storing sleeves for rotary printing machines and blanket cylinder sleeve
Système de manipulation de manchons d'impression, procédé de stockage de manchons pour presses rotatives d'impression et manchon de cylindre de blanchet.

(30) Priorität: 09.10.2000 DE 10050097
(43) Veröffentlichungstag der Anmeldung: 10.04.2002
(73) Patentinhaber: manroland AG, 63075 Offenbach/Main (DE)
(72) Erfinder: Schmid, Georg, 86356 Täfertingen (DE); Sameit, Christian, 86152 Augsburg (DE)
(74) Vertreter: Ulrich, Thomas

(56) Entgegenhaltungen:
- EP-A- 0 572 967
- EP-A- 0 581 056
- EP-A- 1 024 096
- DE-A- 19 614 514
- US-A- 5 113 349
- PATENT ABSTRACTS OF JAPAN vol. 014, no. 399 (M-1017), 29. August 1990 (1990-08-29) & JP 02 151442 A (D S GIKEN:KK), 11. Juni 1990 (1990-06-11)

## Beschreibung

Die Erfindung betrifft ein Druckhülsenmanagement-System gemäß Anspruch 1 ein Verfahren zur Einlagerung von Hülsen für Rotationsdruckmaschinen gemäß Anspruch 23 oder Anspruch 35 und eine Gummizylinderhülse gemäß Anspruch 36.

### [Stand der Technik]

Durch den immer wichtiger werdenden Einsatz von Hülsen für Rotationsdruckmaschinen, insbesondere von Gummizylinderhülsen für Offset-Rotationsdruckmaschinen, werden die Hülsen gekennzeichnet und datentechnisch erfaßt.

Aus der DE 297 20 928 U1 ist eine Druck-Hülse für Flexodruckmaschinen bekannt, in deren Hüllfläche zur Kennzeichnung ein als Transponder ausgestalteter elektronischer Speicherbaustein eingebracht ist.

Mit diesem Speicherbaustein ist eine elektronisch gespeicherte hülsenindividuelle Kennzeichnung möglich, wobei diese Kennzeichnung beispielsweise eine fortlaufende Seriennummer, Herstellungsdatum, Abmessungen und Werkstoffe der Hülse und/oder das vom Kunden auf die Hülse aufgebrachte Motiv oder eine Angabe über den Endabnehmer ist.

Des weiteren können in dem elektronischen Speicherbaustein die oben genannten Informationen zumindest teilweise überschreiben und aktualisiert werden.

Das Überschreiben und Abfragen dieser Informationen erfolgt bei Stillstand der Maschine oder an aus der Maschine herausgenommenen Druck-Hülsen.

In Druckereien gibt es eine Vielzahl von gekennzeichneten Hülsen, die datentechnisch erfaßt sind und nach einem oder mehreren Druckvorgängen wieder eingelagert werden.

Zur Kostenminimierung besteht in den Druckereien der Bedarf bereits benutzte und für den jeweiligen Druckvorgang geeignete Hülsen, insbesondere Gummizylinderhülsen, zu verwenden. Ein genaues Auffinden einer derartigen für den Druckvorgang geeigneten "gebrauchten", d.h. bereits ein oder mehrmals verwendeten, Hülse im Lager ist jedoch mühsam und zeitaufwendig.

### [Aufgabe der Erfindung]

Aufgabe der Erfindung ist es, ein System sowie Verfahren zur Einlagerung von Hülsen für Rotationsdruckmaschinen zu schaffen, welche ein einfaches Auffinden einer gekennzeichneten als Gummizylinderhülse ausgeführten Hülse ermöglicht.

Erfindungsgemäß wird die Aufgabe durch die Merkmale der unabhängigen Ansprüche gelöst. Ausgestaltungen ergeben sich aus den Unteransprüchen sowie aus der Beschreibung in Verbindung mit den Zeichnungen.

Ein bedeutungsvoller Vorteil ist, dass mit der Vorrichtung die Verwendung von Gummizylinderhülsen optimiert werden kann. Eine Druckerei wird durch den spezifischen Einsatz immer mehrere Sätze von Gummizylinderhülsen im Einsatz haben, so dass die gezielte Verwendung von Gummizylinderhülsen, insbesondere bei mehr als einer Druckmaschine, mittels der Vorrichtung gewährleistet ist.

Darüber hinaus wird durch die Vorrichtung eine organisierte Lagerhaltung von Gummizylinderhülsen geschaffen.

Die Vorrichtung zur Einlagerung von Gummizylinderhülsen ist mit einer Speichervorrichtung ausgestattet.

In diese Speichervorrichtung werden sowohl permanent, als auch kurzzeitig zu verwaltende Informationen und Kenndaten abgelegt.

Permanent in der Speichervorrichtung sind Informationen und Kenndaten, wie beispielsweise die Identitäts-Nummer der Gummizylinderhülse, die Bezeichnung der Gummizylinderhülse, Prüfdaten, Herstellungsdaten, Lieferdaten, sowie erster und letzter Einsatztag. Nach Lebensdauerende wird der Ausfallgrund und die Anzahl der Gesamtüberrollungen abgespeichert. Unter den Prüfdaten sind physikalische und geometrische Testwerte, wie beispielsweise Steifigkeitswerte,

Gesamtdicke und Materialstärke der Gummizylinderhülse, sowie Durchmesser und Rauhigkeitsangaben zu verstehen.

Kurzzeitig in der Speichervorrichtung sind die Informationen und Kenndaten, wie beispielsweise Produktionsinformationen und Schadenstatus. Unter dem Schadenstatus ist die Art und der Umfang von Beschädigungen an der Gummizylinderhülse gemeint.

Die oben genannten Produktionsinformationen sind beispielsweise Daten und Informationen über die Anzahl der Waschzyklen, Bahnbreite, Flächengewicht, Bruttoexemplarzahl, mittlere Drehzahl.

Ein optimaler Einsatz der erfindungsgemäßen Vorrichtung zur Einlagerung von Gummizylinderhülsen wird insbesondere bei Verwendung von mit einer Speichervorrichtungen ausgestatteten Gummizylinderhülsen erreicht. Eine derartige Gummizylinderhülse mit einer Speichervorrichtung ist in der nachfolgenden Beschreibung der Beispiele beschrieben.

Bedeutungsvoll ist, dass bei Verwendung von Gummizylinderhülsen mit einer Speichervorrichtung eine Speicherung, ein Überschreiben und eine Abfrage von Kenndaten, dies sind die Gummizylinderhülse individuell kennzeichnende Informationen und Daten, während des Druckbetriebes mit Datenübertragungsvorrichtungen in einer Rotationsdruckmaschine oder über eine mit der in der Vorrichtung zur Einlagerung integrierten Speichervorrichtung in Verbindung stehenden Datenübertragungsvorrichtung möglich ist.

In die Speichervorrichtung der Gummizylinderhülse können ebenfalls die oben bereits genannten permanent und kurzzeitig zu verwaltenden Informationen und Kenndaten abgelegt werden.

Bedeutungsvoll ist, dass zusätzliche Informationen, wie beispielsweise funktionsrelevante Kennzahlen, die Anzahl der Überrollungen, Produktionsinformationen, die Zeitpunkte der Konstruktion und der jeweiligen Einsätze und/oder der Ausmusterung, die Ursache für den Ausfall, Wiederverwendbarkeit, etc. direkt in Form von elektronischen Kenndaten auf der Gummizylinderhülse angebracht werden können. Somit können über die Speichervorrichtung der jeweiligen Gummizylinderhülse diese oben genannten Informationen der Druckmaschine und/oder der Vorrichtung zur Einlagerung von Gummizylinderhülsen übermittelt werden.

Mittels dieser Kenndaten kann man die Ausfallursachen ermitteln und ermöglicht so eine Bewertungsgrundlage für die einzelnen Fabrikationsmethoden oder sonstigen Herstellungsdaten.

Ein weiterer bedeutungsvoller Vorteil ist, dass mittels dieser Kenndaten Aussagen über die Lebensdauer oder das Verhalten einer Gummizylinderhülse während des Laufs in einer oder mehreren Druckmaschinen, d.h. über den gesamten Zeitraum des Einsatzes der Gummizylinderhülse in der Druckerei, gemacht werden können.

Somit wird mittels der sowohl in der Speichervorrichtung der erfindungsgemäßen Vorrichtung abgelegten, als auch der auf der Speichervorrichtung der Gummizylinderhülse aufgebrachten Informationen und Kenndaten eine Voraussetzung für einen kostenbewußten Einsatz von Gummizylinderhülsen, beispielsweise das Management und die Handhabung der Gummizylinderhülse, d. h. die datentechnische Verwaltung und die organisierte Lagerhaltung der Gummizylinderhülse betreffend, geschaffen. Da auf der Innenseite der Gummizylinderhülse aufgrund des Abriebs und auf der Außenseite der Gummizylinderhülse wegen der Verschmutzung durch Farbe keine ausreichende Kennzeichnung möglich ist, ist vorteilhafterweise ein berührungsloses Lese- und Beschreibverfahren sowohl in der Druckmaschine, als auch in der Vorrichtung zur Einlagerung von Gummizylinderhülsen im Einsatz.

Bedeutungsvoll ist, dass die elektronische Speichervorrichtung der Gummizylinderhülse beispielsweise als Transponder ausgestaltet ist.

Die elektronische Speichervorrichtung kann aber auch beispielsweise ein Magnetstreifen, ein Speicherchip oder dergleichen sein.

Von Vorteil ist, dass der Transponder oder jede andere Speichervorrichtung auch nachträglich an bereits beim Kunden vorhandene Gummizylinderhülsen angebracht und angeordnet werden kann.

Die Anordnung des Transponders erfolgt dabei nicht zwingend auf dem gummibeschichteten Bereich der Trägerhülse. Die Anordnung des Transponders kann beispielsweise an den Stirnseiten der Gummischicht erfolgen, wobei der Transponder mit einer als Klebemittel ausgeführten Versiegelung, die zur Versiegelung der Stirnseiten der Gummischicht dient, aufgeklebt wird. Der Transponder oder jede andere Speichervorrichtung kann an jeder beliebigen Stelle der Gummizylinderhülse angebracht werden, wobei der Transponder mittels eines als Klebeband ausgeführten Befestigungsmittels an der Gummizylinderhülse befestigbar ist. Vorteilhafterweise kann der Transponder oder die Speichervorrichtung selbstklebend oder sich selbstbefestigend aufgeführt sein.

Somit ist das Aufkleben des Transponders oder jeder anderen Speichervorrichtung in der Druckerei möglich.

Der Transponder oder die Speichervorrichtung kann nicht näher dargestellt auch in die Metallschicht der Trägerhülse der Gummizylinderhülse eingebettet oder auf dieser Metallschicht angeordnet und/oder befestigt sein.

Es ist auch möglich, dass an der Gummizylinderhülse ein zusätzliches Element oder zusätzliches Mittel oder eine Verlängerung der Gummizylinderhülse anordbar und befestigbar ist, an oder auf welchem der Transponder oder die Speichervorrichtung anordbar und/oder befestigt ist.

Um keine Beeinträchtigungen auf das Druckbild zu verursachen ist der Transponder mit einer kleinen Bauhöhe ausgestaltet. Diese Bauhöhe liegt in einem Bereich zwischen 0,001 mm und 2,0 mm.

Vorteilhaft ist der Transponder nicht auf die Oberfläche der Gummizylinderhülse aufgesetzt, sondern in die Gummischicht oder Struktur der Gummizylinderhülse eingelassen, also beispielsweise allseitig von der Gummischicht umgeben, so daß ein optimaler Schutz für die als Transponder ausgestaltete Speichervorrichtung gewährleistet ist.

Der Transponder kann auch innerhalb einer Kunststoff-Matrix angeordnet sein, welche beispielsweise seitlich an der Gummizylinderhülse angeordnet und/oder in die Struktur der Gummizylinderhülse eingelassen ist, also beispielsweise allseitig von der Gummischicht umgeben ist, so daß ein optimaler Schutz für die als Transponder ausgestaltete Speichervorrichtung gewährleistet ist.

Der Transponder kann auch auf der Trägerhülse aufgesetzt oder in die Trägerhülse eingelassen oder eingebettet sein, wobei hier die Trägerhülse aus Kunststoffen oder Verbundwerkstoffen, beispielsweise Faserverbundwerkstoffe wie Carbonfaser-Kunststoffe (CFK), besteht.

Der Transponder wird vorzugsweise im Randbereich der Gummizylinderhülse ein- oder aufgebracht und kann so dann sowohl mit stationär in der Druckmaschine oder in der erfindungsgemäßen Vorrichtung angeordneten als Datenlesegerät oder als Datenaustauschgerät ausgestalteten Datenübertragungsvorrichtung, als auch von einem als Handgerät ausgeführten Datenaustauschgerät gelesen und auch beschrieben werden.

Der Randbereich eignet sich mehr als die restlichen Stellen der Gummizylinderhülse, insbesondere der Gummischicht, da hier keine Pressung auftritt und der Transponder auf diese Weise bedingt durch äußere Einflüsse mechanisch nicht so stark belastet wird. Der Einsatz im Randbereich ist jedoch nicht zwingend notwendig.

Vorteilhaft ist, dass die in die Gummizylinderhülse angeordnete Speichervorrichtung sowohl keine Aufweitung der Außenseite als auch keine Aufweitung der Innenseite der Gummizylinderhülse verursacht, wobei die Gummizylinderhülse somit frei von Erhöhungen ausgestaltet ist, so daß die Präzision der Gummizylinderhülse hinsichtlich ihrer Handhabbarkeit und auch hinsichtlich des erzielbaren Druckbildes nicht beeinträchtigt ist.

Bedeutungsvoll ist, dass sowohl in allen Druckwerken einer Druckmaschine, als auch der Vorrichtung zur Einlagerung von Gummizylinderhülsen ein stationäres Datenlesegerät oder Datenaustauschgerät betrieben wird und diese Datenlesegeräte oder Datenaustauschgeräte mit der zentralen Maschinensteuerung oder mit einer Rechen- und Speichereinheit in Verbindung stehen, wodurch dann für jede Druckmaschine und die jeweilige Vorrichtung zur Einlagerung von Gummizylinderhülsen die Verwaltung sowohl dieser Gummizylinderhülsen, als auch der diese Gummizylinderhülsen kennzeichnenden Informationen und Kenndaten erleichtert wird.

Bedeutungsvoll ist, dass mittels der eingesetzten Speichervorrichtungen die Kenndaten einer Gummizylinderhülse jederzeit einwandfrei erkennbar und aktualisierbar sind.

Es ist somit ein spontaner Abruf und Zugriff aller für einen Produktionsablauf wichtiger auf die Gummizylinderhülse bezogener Daten, wie Kenndaten, Betriebsdaten und Druckmaschinendaten, ermöglicht.

Bedeutungsvoll ist, dass mittels der an den Gummizylinderhülsen eingesetzten Speichervorrichtungen die Identität, beispielsweise in Form einer auf der Speichervorrichtung abgelegten Identitäts-Nummer, und/oder Kenndaten der Gummizylinderhülse jederzeit einwandfrei erkennbar sind.

Es ist somit ein spontaner Abruf und Zugriff aller für einen Produktionsablauf wichtiger auf die Gummizylinderhülse bezogener Informationen und Daten, insbesondere Kenndaten, ermöglicht, wobei während des Produktionsablaufes von den Druckwerken bzw. auch aus Berechnungen der Rechen- und Speichervorrichtungen, dem Leitstand oder dem zentralen Rechner der Druckmaschine die in den Speichervorrichtungen abgelegten die Gummizylinderhülse kennzeichnenden Daten permanent aktualisiert werden.

Des weiteren ergeben sich mittels des Zusammenwirkens der Speichervorrichtung in der Gummizylinderhülse und der Speichervorrichtung der erfindungsgemäßen Vorrichtung auch Vorteile in der Lagerhaltung und Herstellung von Gummizylinderhülsen, da jede Gummizylinderhülse ständig ihren durch die Kenndaten definierten "Pass" mit sich führt und diese Kenndaten während des Druckeinsatzes in der Speichervorrichtung der Gummizylinderhülse kontinuierlich aktualisiert werden.

Auch ergeben sich mittels des Zusammenwirkens der Speichervorrichtung in der Gummizylinderhülse und der Speichervorrichtung der erfindungsgemäßen Vorrichtung Vorteile in der Lagerhaltung und Herstellung von Gummizylinderhülsen, da jede Gummizylinderhülse ständig ihren durch die Kenndaten definierten "Pass" mit sich führt und diese Kenndaten während des Druckeinsatzes der Gummizylinderhülse in den Rechen- und Speichervorrichtungen der Rotationsdruckmaschine und in der Rechen- und Speichervorrichtung der Vorrichtung zur Einlagerung kontinuierlich aktualisiert werden.

Die Informationen und Kenndaten unterstützen zu jedem Zeitpunkt die Handhabung und das Management der Gummizylinderhülse im Bereich der Logistik, beispielsweise im Wareneingang und der Lagerhaltung, im Bereich des Einsatzes der Gummizylinderhülse, beispielsweise Auswahl oder Einsatzbestimmung der Gummizylinderhülse für eine bestimmte Produktion und Produktionstauglichkeit, und in Bereichen der Analyse der Lebensdauer einer Gummizylinderhülse und Freigabe der Gummizylinderhülse zur Entsorgung.

Zu erwähnen ist, dass mittels der in der Vorrichtung zur Einlagerung von Gummizylinderhülsen abgelegten Informationen und Kenndaten über die zu verwaltenden Gummizylinderhülsen Bestellungen nach Bedarf automatisiert ausgelöst werden können.

Die in der Gummizylinderhülse angeordnete Speichervorrichtung liefert an die Vorrichtung zur Einlagerung über die gesamte Lebensdauer der Gummizylinderhülse die notwendigen Informationen zur optimalen Ausnutzung der zu verwaltenden und für Druckaufträge bereitzustellenden Gummizylinderhülsen und erfüllt sowohl die Anforderung der Datenbereitstellung zum Datenablesen, als auch die Anforderung des Datenaustauschens und der Datenspeicherung ohne Beeinträchtigung der Druckqualität perfekt.

Bedeutungsvoll ist, dass Kosteneinsparungen ermöglicht werden, indem Fehler beim Druck und somit eine Erhöhung und Verbesserung der Druckqualität erreicht werden. Über diese Kosteneinsparung hinaus wird auch eine Erhöhung der Nutzungsdauer von Gummizylinderhülsen durch die Automation der Einlagerung und Bereitstellung der Gummizylinderhülsen erreicht, wodurch wiederum weitere Kosteneinsparungen realisierbar sind.

Erwähnenswert ist, dass mittels der Vorrichtung Kosten, insbesondere Personalkosten, eingespart werden, da nicht mehr der die Druckmaschine bedienende Drucker, sondern die Vorrichtung zur Einlagerung eine zum jeweiligen Druckauftrag passende Gummizylinderhülse automatisiert aufsucht und bereitstellt.

Mittels der erfindungsgemäßen Vorrichtung im Zusammenwirken mit den Gummizylinderhülsen, der Druckmaschine und der zentralen Maschinensteuerung können Angaben zur Lebensdauer und zur Qualität der Gummizylinderhülsen gemacht werden.

Des weiteren ist es von Vorteil, dass über die in die Maschinensteuerung und/oder in die Speichervorrichtung der Vorrichtung zur Einlagerung von Gummizylinderhülsen einfließenden oben genannten Informationen und Kenndaten über die verwalteten oder im Druckbetrieb befindlichen Gummizylinderhülsen eine Statistik aufstellbar ist. Mittels dieser Statistik ist der wahrscheinliche Ausfall der jeweiligen Gummizylinderhülse zeitlich berechenbar, wodurch insgesamt betrachtet eine Erhöhung der Nutzungsdauer der Gummizylinderhülsen erreichbar ist.

Vorteilhaft ist, dass der die Druckmaschine bedienende Drukker durch die automatisierte Datenverarbeitung und den automatisierten Datenaustausch über die in der Gummizylinderhülse angeordnete Speichervorrichtung im Produktionsprozeß nicht behindert wird.

Vorteilhaft ist, dass der die Druckmaschine bedienende Drukker durch die automatisierte Datenverarbeitung und den automatisierten Datenaustausch zwischen den Rechen- und Speichervorrichtungen der gesamten Rotationsdruckmaschinenanlage mit der Vorrichtung zur Einlagerung von Gummizylinderhülsen im Produktionsprozeß nicht behindert wird.

Die erfindungsgemäße Vorrichtung soll sich nicht nur auf den Einsatz bei Gummizylinderhülsen mit einer Speichervorrichtung beschränken. Die Vorrichtung kann auch zur Lagerung von Gummizylinderhülsen verwendet werden, die ihre Bezeichnung und/oder Kenndaten auf der Innenseite eingebrannt haben oder eine anderweitige Beschriftung oder Kennzeichnung haben, beispielsweise in Form eines Barcode, welche auf der Oberfläche oder an einer der Stirnseiten der Gummizylinderhülse angeordnet ist.

Hierzu werden spezielle zum Datenauslesen auf die jeweilige Kennzeichnung abgestimmte Datenlesegeräte verwendet.

Werden Kennzeichnungen verwendet, die von keinem maschinellen Datenlesegerät und/oder Datenaustauschgerät lesbar oder erkennbar sind, dann sind an jeweiligen Druckwerken und an der Vorrichtung Eingabevorrichtungen angeordnet. Mit den Eingabevorrichtungen kann der die Druckmaschine zu bedienende Drucker die auf der Gummizylinderhülse aufgebrachte Kennzeichnung manuell eingeben.

Es besteht dadurch die Möglichkeit, daß die Vorrichtung zur Einlagerung von Gummizylinderhülsen auch für noch nicht in irgendeiner Form gekennzeichnete Gummizylinderhülsen Verwendung finden kann. Somit können auch die Vorteile der Vorrichtung selbst bei noch nicht in irgendeiner Form gekennzeichnete Gummizylinderhülsen Anwendung finden und ausgenützt werden.

Durch die erfindungsgemäße Vorrichtung wird eine intelligente Lagerung von Gummizylinderhülsen geschaffen, welche unter Einbeziehung sowohl der Schnittstelle zur Herstellung von Gummizylinderhülsen, als auch der Schnittstelle des Einsatzes der Gummizylinderhülse eine Statistik zur zeitlichen Bestimmung des Ausfalles der jeweiligen Gummizylinderhülse ermöglicht.

Besonders zu erwähnen ist, dass die Rechen- und/oder Speichervorrichtung der Vorrichtung zur Einlagerung mit einer Schnittstelle ausgestattet ist, welche von externer Stelle aus anzapfbar ist, wobei über diese Schnittstelle Kenndaten und Informationen der jeweiligen Gummizylinderhülse und die Daten und Informationen über den Produktionsablauf, die Einsatzbedingungen und Prozessdaten der jeweiligen Druckmaschine und/oder des jeweiligen Druckwerkes von externer Stelle abrufbar und neue Daten und Informationen übermittelbar sind.

Somit können die Daten, beispielsweise Herstellungsdaten und individuell bei der Herstellung entstehende Informationen, einer neuen Gummizylinderhülse vom Gummizylinderhülsenhersteller über die extern zugängliche Schnittstelle in die Rechen- und/oder Speichervorrichtung der Vorrichtung zur Einlagerung übermittelt und dort abgespeichert werden.

Für den Gummizylinderhersteller und den Druckmaschinenhersteller ergibt sich mittels der extern zugänglichen Schnittstelle der Vorteil, dass die in der Rechen- und/oder Speichervorrichtung der Vorrichtung zur Einlagerung abgespeicherten und verwalteten Daten und Informationen über die Gummizylinderhülsen, die Produktionsdaten und die Maschinendaten dem jeweiligen Hersteller Aufschluß über die Qualität, über mögliche oder reale Ausfallursachen und über das Verhalten im Produktionseinsatz seiner Produkte geben.

Der Hersteller ist somit auf Grund dieser ihm übermittelten Daten und Informationen in der Lage, Qualitätsverbesserungen an der Druckmaschine, dem Druckwerk oder der Gummizylinderhülse vorzunehmen.

Der Hersteller kann sich eine zentrale Datenbank aufbauen, wobei die in der Datenbank abgespeicherten und verwalteten Informationen und Kenndaten über die bei den Kunden in den Rechen- und Speichervorrichtungen der einzelnen Vorrichtungen zur Einlagerung von Gummizylinderhülsen hinterlegten und abgespeicherten oben genannten Daten mittels der dem Hersteller extern zugänglichen Schnittstelle ständig abgerufen und somit der sich aus diesen Daten bestehende Datenbankbestand ständig aktualisiert wird.

Eine derartige Vorrichtung kann auch als Sleevemanagement-System oder Druckhülsenmanagement-System oder Gummizylinderhülsen-Management-System bezeichnet werden.

Die Erfindung betrifft auch ein Verfahren zum Einlagern von Gummizylinderhülsen einer Druckmaschine, nach dem ein einfaches Auffinden einer gekennzeichneten Gummizylinderhülse ermöglicht ist.

Die Verfahrensmerkmale sind in dem unabhängigen Anspruch 23 oder in dem unabhängigen Anspruch 35 wiedergegeben. Im Einzelnen ist das Verfahren der nachfolgenden Beschreibung in Verbindung mit den Zeichnungen zu entnehmen.

### [Beispiele]

Die Erfindung soll nachstehend an einem Ausführungsbeispiel näher erläutert werden. Es zeigt schematisch:
Fig. 1 eine Vorrichtung zur Ein- und Auslagerung von Gummizylinderhülsen mit einer auf der Gummizylinderhülse angeordneten Speichervorrichtung nach der Erfindung,
Fig. 2 eine Vorrichtung gemäß Fig. 1 mit einem durch den die Druckmaschine bedienenden Drucker zu bedienenden Handeingabegerät zur Beurteilung des Zustandes der Gummizylinderhülse,
Fig. 3 eine Vorrichtung gemäß Fig. 1 mit einer Vorrichtung zur Beurteilung des Zustandes der Gummizylinderhülse,

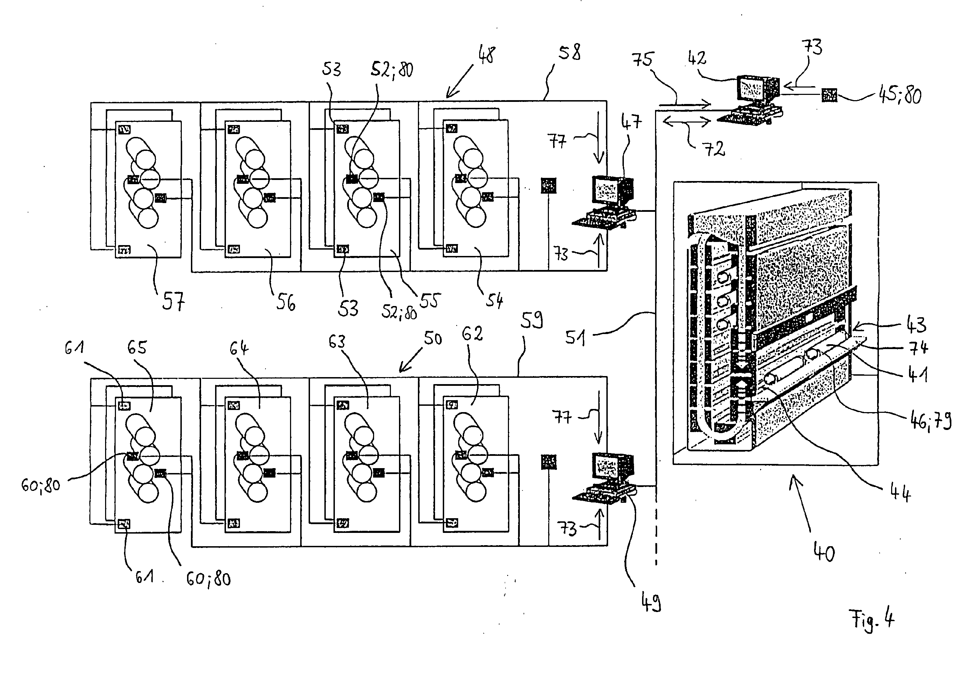

Fig. 4 eine Vorrichtung zur Ein- und Auslagerung von Gummizylinderhülsen mit einer auf der Gummizylinderhülse angeordneten Kennzeichnung nach der Erfindung,
Fig. 5 eine Vorrichtung gemäß Fig. 4 mit einem durch den die Druckmaschine bedienenden Drucker zu bedienenden Handeingabegerät zur Beurteilung des Zustandes der Gummizylinderhülse,
Fig. 6 eine Vorrichtung gemäß Fig. 4 mit einer Vorrichtung zur Beurteilung des Zustandes der Gummizylinderhülse,
Fig. 7 eine Gummizylinderhülse mit einer Speichervorrichtung nach der Erfindung.

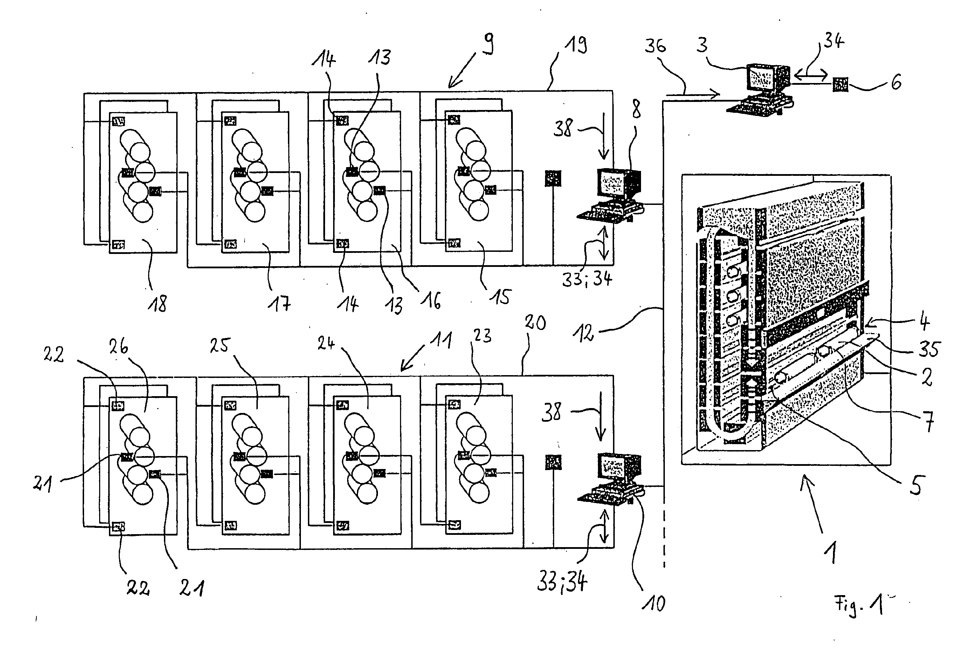

In Fig. 1 ist eine Vorrichtung 1 zur Einlagerung von Gummizylinderhülsen 2 gezeigt, die mit einer Speichervorrichtung 3 verbunden ist.

Die Vorrichtung 1 ist beispielsweise als magazinartiges oder paternosterartiges Lager oder Hochregallager ausgeführt.

Die Vorrichtung 1 weist eine Vielzahl von Lagerplätzen 5 auf, die hintereinander, überanander und/oder nebeneinander in der Vorrichtung 1 angeordnet sind, wobei der jeweilige Lagerplatz 5 an eine Aus- und Einlagerungsposition 4 verbringbar ist. Im Bereich der Aus- und Einlagerungsposition 4 sind Datenaustauschgeräte 6 stationär an der Vorrichtung 1 angebracht.

Mit diesen Datenaustauschgeräten 6 lassen sich an den Gummizylinderhülsen 2 befindliche Speichervorrichtungen 7 lesen und beschreiben.

Die Speichervorrichtung 7 ist als Transponder ausgestaltet. Die Speichervorrichtung 7 kann, nicht näher dargestellt, alternativ auch ein Magnetstreifen, ein Speicherchip oder dergleichen sein.

Die Speichervorrichtung 3 der Vorrichtung 1 ist datenaustauschend mit einer Rechen- und Speichervorrichtung 8 einer ersten Druckmaschine 9 und mit einer Rechen- und Speichervorrichtung 10 einer weiteren Druckmaschine 11 verbunden.

Mit der Speichervorrichtung 3 der Vorrichtung 1 kann eine beliebige Anzahl von Speichervorrichtungen und von Druckmaschinen über Datenleitungen 12 datenaustauschend verbunden sein.

Die Rechen- und Speichervorrichtung 8 der Druckmaschine 9 ist über Datenleitungen 19 mit Datenaustauschgeräten 13 und Zählerausgängen 14 einzelner Druckwerke 15; 16; 17; 18 der Druckmaschine 9 verbunden.

Die Rechen- und Speichervorrichtung 10 der Druckmaschine 11 ist über Datenleitungen 20 mit Datenaustauschgeräten 21 und Zählerausgängen 22 einzelner Druckwerke 23; 24; 25; 26 der Druckmaschine 11 verbunden.

Die Rechen- und Speichervorrichtungen 8; 10 können ein Leitstand, eine Maschinensteuerung oder ein zentraler Rechner der Druckmaschine 9; 11 sein. Alternativ kann die Speichervorrichtung 3 der Vorrichtung 1 in mindestens eine der Rechen- und Speichervorrichtungen 8; 10 integriert sein oder durch mindestens eine der Rechen- und Speichervorrichtungen 8; 10 ersetzt werden.

An der Aus- und Einlagerungsposition 4 der Vorrichtung 1 kann eine Vorrichtung zur Kennzeichnung 39 der auszulagernden Gummizylinderhülsen 2 angeordnet sein. Mit dieser Vorrichtung zur Kennzeichnung 39 läßt sich beispielsweise ein Etikett, eine Bezeichnung, ein Code oder ein Aufdruck auf die auszulagernde Gummizylinderhülse 2 aufbringen. Somit läßt sich mit der Vorrichtung zur Kennzeichnung 39 eine Bezeichnung für das für die Gummizylinderhülse vorbestimmte Druckwerk unabhängig von der Speichervorrichtung 7 auf die Gummizylinderhülse 2 aufbringen. Mit Hilfe dieser Bezeichnung wird dem die Druckmaschine bedienenden Drucker das Auffinden des Druckwerkes erleichtert.

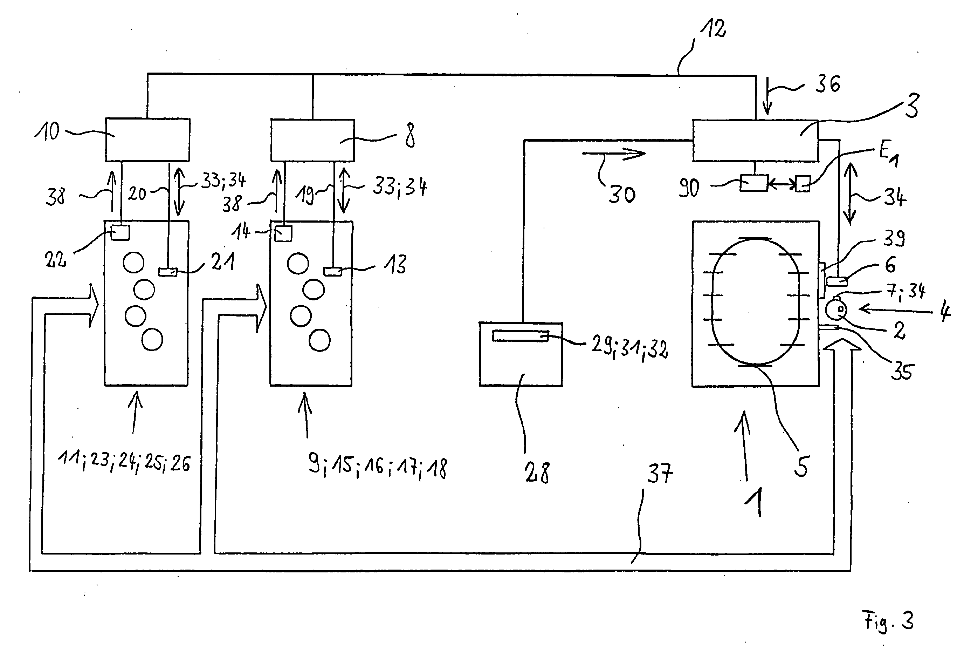

Beim Auslagern und Bereitstellen der Gummizylinderhülse 2 aus der Vorrichtung 1 kann mittels einer Transportvorrichtung 37 ein automatischer Transport von der Vorrichtung 1 zur jeweiligen Druckmaschine 9; 11 und/oder zum jeweiligen Druckwerk 15 bis 18; 23 bis 26 erfolgen (siehe Fig. 3).

Die Transportvorrichtung 37 kann auch derart angeordnet sein, dass ein Transport der Gummizylinderhülse 2 von der Aus- und Einlagerungsposition 4 zur jeweiligen Druckmaschine 9; 11 und/oder zum jeweiligen Druckwerk 15 bis 18; 23 bis 26 erfolgen kann.

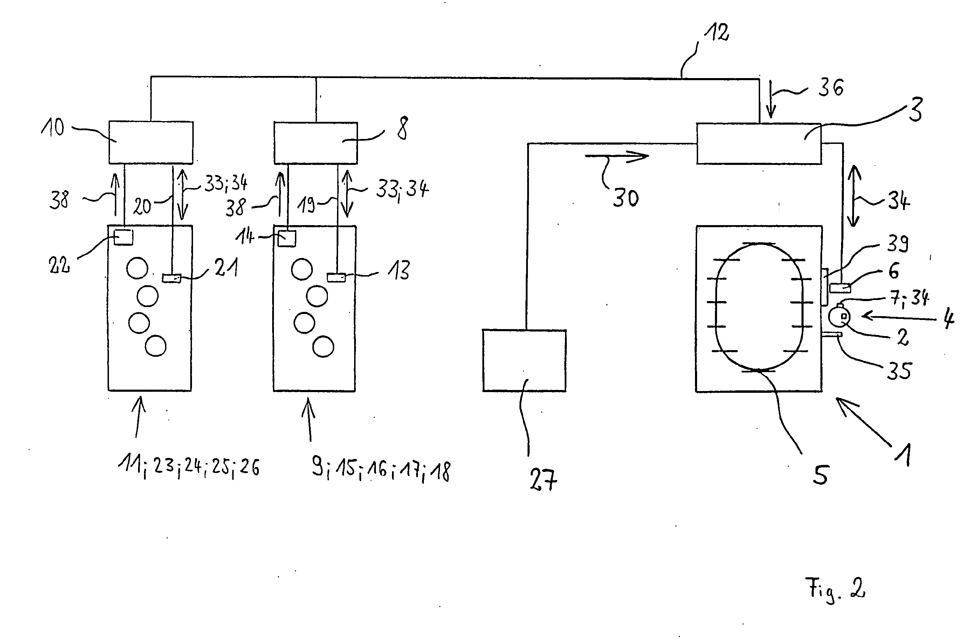

Vor dem Einlagern in die Vorrichtung 1 muß der die Druckmaschine bedienende Drucker den Schadenstatus der jeweiligen Gummizylinderhülse 2 beurteilen. Die Eingabe und Übermittlung seiner Beurteilung über Beschädigungen und somit den aus den Beschädigungen resultierenden Schadenstatus erfolgt vom die Druckmaschine bedienenden Drucker direkt über ein als Bedienpult und/oder Tatstatur ausgestaltetes Handeingabegerät 27. Das Handeingabegerät 27 kann mit der Speichervorrichtung 3 datenaustauschend verbunden sein (siehe Fig. 2).

In Fig. 3 ist eine Vorrichtung 28 zur Beurteilung und Erfassung des Schadenstatus der jeweiligen Gummizylinderhülse 2 gezeigt. Hier erfolgt keine Beurteilung des Schadensstautus durch den die Druckmaschine bedienenden Drucker, sondern die Vorrichtung 28 übernimmt die Aufgabe der Beurteilung und Erfassung des Schadenstatus der jeweiligen Gummizylinderhülse 2.

Die Vorrichtung 28 kann, nicht näher dargestellt, eine elektromechanisch ausgestaltete Vorrichtung sein, wobei mechanische Sensoren 29 die Oberfläche der Gummizylinderhülse abtasten und diese mechanischen Signale in elektronische Daten 30 umwandelt werden, wobei diese den Schadenstatus definierenden elektronischen Daten 30 dann der Speichervorrichtung 3 automatisch übermittelt werden.

Alternativ kann die Vorrichtung 28 auch als eine elektronische oder optoelektronische (optische und elektronische) Vorrichtung ausgestaltet sein, wobei die Oberfläche der Gummizylinderhülse beispielsweise durch Schallwellen aussendenden Sensoren 31, beispielsweise Ultraschall, oder Lichtstrahlen aussenden Sensoren 32, beispielsweise Infrarot oder Laser, abgetastet und überprüft wird. Die den Schadenstatus definierenden elektronischen Daten 30 werden dann wieder der Speichervorrichtung 3 automatisch übermittelt.

Die Funktionsweise der Vorrichtung 1 soll im Nachfolgenden am Vorgang des Einlagerns einer Gummizylinderhülse und des Bereitstellens bzw. Auslagerns einer Gummizylinderhülse näher erläutert werden.

### Einlagern einer Gummizylinderhülse:

Der die Druckmaschine bedienende Drucker startet durch einen Tastendruck am Leitstand oder der Rechen- und Speichervorrichtung 8; 10 der Druckmaschine 9; 11 den Datenaustausch zwischen der an der Gummizylinderhülse 2 angeordneten Speichervorrichtung 7 und den in den Druckwerken 15 bis 18; 23 bis 26 angeordneten Datenaustauschgeräten 13; 21 unter Einbeziehung eines von den Zählerausgängen 14; 22 an die Rechnen- und Speichervorrichtung 8; 10 übermittelten Zählerstandes 38.

Den an der Gummizylinderhülse 2 angeordneten Speichervorrichtungen 7 werden von den stationär in den einzelnen Druckwerken 15 bis 18; 23 bis 26 angeordneten Datenaustauschgeräten 13; 21 Kenndaten 33 übertragen und auf der Speichervorrichtung 7 bereits befindliche Kenndaten 34 von diesen gelesen. Das stationäre Datenaustauschgerät 13; 21 ist in unmittelbarer Nähe der Speichervorrichtung 7 angeordnet.

Die Zählerausgänge 14; 22 der einzelnen Druckwerke 15 bis 18; 23 bis 26 sind mit einer Maschinensteuerung oder einem Leitrechner der Maschine oder einer Rechen- und Speichereinheit 8; 10, die beispielsweise in Form eines Computers ausgestaltet sind, verbunden.

Die Datenaustauschgeräte 13; 21 sind mit einer Maschinensteuerung oder einem Leitrechner der Maschine oder einer Rechen- und Speichereinheit 8; 10, die beispielsweise in Form eines Computers ausgestaltet sind, verbunden.

Die auf die Speichervorrichtung 7 zu übertragenden die Gummizylinderhülse 2 kennzeichnenden Kenndaten 33 ergeben sich aus von den Zählerausgängen 14; 22 der einzelnen Druckwerke 15 bis 18; 23 bis 26 ermittelten Informationen, sowie der sich aus dem Druckvorgang ergebenden Informationen und bereits aus bei der Gummizylinderherstellung und Qualitätsprüfung resultierenden und vorprogrammierten Informationen.

Die Kenndaten 33 werden von der Maschinensteuerung oder von dem Leitrechner der Maschine oder der Rechen- und Speichereinheit 8; 10 an das Datenaustauschgerät 13; 21 gesendet und automatisch an die Speichervorrichtung 7 übermittelt.

Bei den Kenndaten 33; 34 handelt es sich beispielsweise um die Identitäts-Nummer der Gummizylinderhülse 2, die Bezeichnung der Gummizylinderhülse 2, Herstellungsdaten, Lebensdauer und Einsatzzeit, während des Druckeinsatzes aufgetretene Fehler, Art und Anzahl der Druckbilder und weitere drucktechnische Randinformationen, wie beispielsweise Produktionsinformationen.

Die oben genannten Produktionsinformationen sind beispielsweise Daten und Informationen über die Anzahl der Waschzyklen, Bahnbreite, Flächengewicht, Bruttoexemplarzahl und mittlere Drehzahl.

Weitere Kenndaten 33; 34 sind beispielsweise Prüfdaten, Lieferdaten, sowie erster und letzter Einsatztag. Nach Lebensdauerende wird der Ausfallgrund und die Anzahl der Gesamtüberrollungen abgespeichert.

Unter den Prüfdaten sind physikalische und geometrische Testwerte, wie beispielsweise Steifigkeitswerte, Gesamtdicke und Materialstärke der Gummizylinderhülse 2, sowie Durchmesser und Rauhigkeitsangaben zu verstehen.

Somit bestehen die Kenndaten aus die Gummizylinderhülse 2 individuell kennzeichnenden Daten und/oder Betriebsdaten, wie beispielsweise Maschinendaten.

Nach dem Übertragen der Kenndaten 33 auf die Speichervorrichtung 7 kann die Gummizylinderhülse 2 aus dem Druckwerk entnommen werden.

Der die Druckmaschine bedienende Drucker muß nun den Schadenstatus anhand von auftretenden Beschädigungen an der Oberfläche der Gummizylinderhülse 2 ermitteln.

Die Daten 30 über den Schadenstatus der jeweiligen Gummizylinderhülse 2 werden vom die Druckmaschine bedienenden Drukker direkt über ein als Bedienpult und/oder als Tastatur ausgestaltetes Handeingabegerät 27 in die Speichervorrichtung 3 eingegeben (siehe Fig. 2).

Alternativ kann der Schadenstatus der jeweiligen Gummizylinderhülse 2 mittels einer Vorrichtung 28 ermittelt werden (siehe Fig. 3). Der die Druckmaschine bedienende Drucker legt die zu prüfende Gummizylinderhülse 2 in die Vorrichtung 28 ein, wobei die Vorrichtung 28 die Oberfläche der Gummizylinderhülse mittels Sensoren 29; 31; 32 nach Beschädigungen überprüft. Die von den Sensoren 29; 31; 32 ermittelten Informationen werden in elektronische Daten 30 umgewandelt und diese Daten 30, die Auskunft geben über den Schadenstatus der jeweiligen Gummizylinderhülse 2, werden dabei von der Vorrichtung 28 automatisch in die Speichervorrichtung 3 übertragen.

Die Gummizylinderhülse 2 wird nun zu der Vorrichtung 1 gebracht, um eingelagert zu werden. Die Gummizylinderhülse 2 wird auf ein an der Aus- und Einlagerungsposition 4 der Vorrichtung 1 angeordnetes Auflageelement 35 gelegt.

Die an der Aus- und Einlagerungsposition 4 der Vorrichtung 1 angeordneten Datenaustauschgeräte 6 lesen die auf der Speichervorrichtung 7 der Gummizylinderhülse 2 gespeicherten Kenndaten 34 aus und übermitteln gemäß der in diesen Kenndaten 34 offenbarten Identitäts-Nummer oder Bezeichnung der Gummizylinderhülse die jeweils dazugehörenden Daten 30 des Schadenstatus. Die aus der Speichervorrichtung 7 der Gummizylinderhülse ausgelesenen Kenndaten 34 werden in die Speichervorrichtung 3 übertragen und abgespeichert.

Anschließend wird die Gummizylinderhülse 2 in einen unbesetzten Lagerplatz 5 eingelagert, der vorher an die Aus- und Einlagerungsposition 4 verbracht wurde. Der Lagerplatz 5 wird mit den zuvor von der Speichervorrichtung 7 ausgelesenen Kenndaten 34 in der Speichervorrichtung 3 abgespeichert. Der Lagerplatz 5 kann zusätzlich noch auf der Speichervorrichtung 7 der Gummizylinderhülse 2 abgespeichert werden.

In der Speichervorrichtung 3 sind nach dem Einlagern der Gummizylinderhülse 2 somit alle Kenndaten 33; 34 abgespeichert und abrufbar, wobei die Kenndaten 33; 34 sowohl die Gummizylinder individuell kennzeichnende Daten und/oder die Betriebsdaten und/oder die Daten 30 über den Schadenstatus umfassen.

### Auslagern bzw. Bereitstellen einer Gummizylinderhülse:

Über den Leitstand, die Maschinensteuerung, den Leitrechner der Maschine und/oder die Rechen- und Speichereinheit 8; 10 werden Daten 36 eines Druckauftrages an die Speichereinrichtung 3 der Vorrichtung 1 übermittelt.

Aus diesen Daten 36 sucht die Speichervorrichtung 3 eine geeignete in der Vorrichtung 1 eingelagerte Gummizylinderhülse 2, welche sowohl für den Druckauftrag, als auch für das jeweilige Druckwerk 15 bis 18; 23 bis 26 gemäß der in der Speichervorrichtung 3 abgespeicherten Kenndaten 33; 34 der eingelagerten Gummizylinderhülsen 2 geeignet ist und die gestellten aus den Daten 36 sich ergebenden Anforderungen erfüllt.

Steht keine geeignete gebrauchte Gummizylinderhülse 2 zur Verfügung, so wird eine in der Vorrichtung 1 eingelagerte neue Gummizylinderhülse 2 von der Speichervorrichtung ausgewählt.

Wird eine geeignete Gummizylinderhülse 2 im Datenbestand der Speichervorrichtung 3 gefunden, so verbringt die Vorrichtung 1 den Lagerort 5 dieser Gummizylinderhülse 2 an die Aus- und Einlagerungsposition 4. Dort kann dann die Gummizylinderhülse 2 vom die Druckmaschine bedienenden Drucker entnommen werden.

An der Aus- und Einlagerungsposition 4 kann mittels der Vorrichtung zur Kennzeichnung 39 beispielsweise ein Etikett, eine Bezeichnung, ein Code oder ein Aufdruck auf die auszulagernde Gummizylinderhülse 2 aufgebracht werden, womit eine Bezeichnung oder ein Hinweis für das für die Gummizylinderhülse 2 vorbestimmte Druckwerk 15 bis 18; 23 bis 26 unabhängig vom Dateninhalt der Speichervorrichtung 7 auf die Gummizylinderhülse 2 aufbringbar ist. Dadurch wird dem die Druckmaschine bedienenden Drucker das Auffinden dieses Druckwerkes erleichtert.

Beim Auslagern und Bereitstellen der Gummizylinderhülse 2 aus der Vorrichtung 1 kann mittels einer Transportvorrichtung 37 ein automatischer Transport von der Vorrichtung 1 zur jeweiligen Druckmaschine 9; 11 und/oder zum jeweiligen Druckwerk 15 bis 18; 23 bis 26 erfolgen (siehe Fig. 3).

Die Gummizylinderhülse 2 wird in das geeignete Druckwerk 15 bis 18; 23 bis 26 eingesetzt.

Der die Druckmaschine bedienende Drucker startet durch einen Tastendruck am Leitstand oder der Rechen- und Speichervorrichtung 8; 10 der Druckmaschine 9; 11 den Datenaustausch zwischen der an der Gummizylinderhülse 2 angeordneten Speichervorrichtung 7 und den in den Druckwerken 15 bis 18; 23 bis 26 angeordneten Datenaustauschgeräten 13; 21 unter Einbeziehung eines von den Zählerausgängen 14; 22 an die Rechnen- und Speichervorrichtung 8; 10 übermittelten Zählerstandes 38.

Somit werden die Kenndaten 34 der Gummizylinderhülse 2 in die Rechen- und Speichervorrichtung 8; 10 der jeweiligen Druckmaschine 9; 11 eingelesen und die in der Rechen und Speichervorrichtung 8; 10 enthaltene Datenbank über die Kenndaten 34 aktualisiert.

Den an der Gummizylinderhülse 2 angeordneten Speichervorrichtungen 7 werden von den stationär in den einzelnen Druckwerken 15 bis 18; 23 bis 26 angeordneten Datenaustauschgeräten 13; 21 Kenndaten 33 übertragen und auf der Speichervorrichtung 7 bereits befindliche Kenndaten 34 von diesen gelesen.

Sollten für zukünftige Druckaufträge benötigte Gummizylinderhülsen 2 fehlen oder auf Grund der Statistik über den wahrscheinlichen Zeitpunkt des Ausfalles einer Gummizylinderhülse 2 ein Bedarf an neuen Gummizylinderhülsen in Zukunft entstehen, so können Bestellungen über die Vorrichtung 1 bzw. die Speichervorrichtung 3 automatisch ausgelöst werden. Bedeutungsvoll ist, dass zusätzliche Informationen, wie beispielsweise funktionsrelevante Kennzahlen, die Anzahl der Überrollungen, Produktionsinformationen, die Zeitpunkte der Konstruktion und der jeweiligen Einsätze und/oder der Ausmusterung, die Ursache für den Ausfall, Wiederverwendbarkeit, etc. direkt in Form von elektronischen Kenndaten 33; 34 auf der Speichervorrichtung 7 der Gummizylinderhülse 2 angebracht werden können. Somit können über die Speichervorrichtung 7 der jeweiligen Gummizylinderhülse 2 diese oben genannten Informationen der Druckmaschine 9; 11 und/oder der Vorrichtung 1 bzw. der Speichervorrichtung 3 der Vorrichtung 1 zur Einlagerung von Gummizylinderhülsen 2 übermittelt und gegenseitig ausgetauscht werden.

Mittels dieser Kenndaten 33; 34 kann man die Ausfallursachen ermitteln und ermöglicht so eine Bewertungsgrundlage für die einzelnen Fabrikationsmethoden oder sonstigen Herstellungsdaten.

Die Speichervorrichtung 7 dient somit als Datenträger und als Mittel zur Datenübertragung und zum Datenaustausch für die die Gummizylinderhülse 2 individuell kennzeichnenden Kenndaten 33; 34.

Darüber hinaus dient die Speichervorrichtung 7 auch als Datenträger zur Weiterleitung der zunächst von der Druckmaschine 9; 11 auf die Speichervorrichtung 7 übermittelten Kenndaten 33 an die Speichervorrichtung 3 der Vorrichtung 1. Umgekehrt dient die Speichervorrichtung 7 auch als Datenträger zur Weiterleitung der zunächst von der Speichervorrichtung 3 auf die Speichervorrichtung 7 übermittelten Kenndaten 33 an die Druckmaschine 9; 11.

Nicht näher dargestellt können der Speichervorrichtung 3 und der Speichervorrichtung 7 die Kenndaten 33 anstelle mittels der stationär angeordneten Datenaustauschgeräte 6; 13; 21 mittels eines als tragbares Handgerät ausgeführten Datenaustauschgerätes übermittelt und ausgetauscht werden.

Die Vorrichtung 1 und die dazugehörige Speichervorrichtung 3 kann darüber hinaus auch zur Beurteilung von Druckqualität und Verschleiß von Gummizylinderhülsen 2 eingesetzt werden und soll sich nicht nur auf die Anwendung zur Einlagerung und Bereitstellung von Gummizylinderhülsen 2 beschränken.

Besonders zu erwähnen ist, dass die Rechen- und/oder Speichervorrichtung 3 der Vorrichtung 1 mit einer Schnittstelle 90 ausgestattet ist, welche von externer Stelle E₁ aus anzapfbar ist, wobei über diese Schnittstelle 90 die Kenndaten 33; 34 und die Informationen der jeweiligen Gummizylinderhülse 2 und die Daten und die Informationen über den Produktionsablauf, die Einsatzbedingungen und Prozessdaten der jeweiligen Druckmaschine 9; 11 und/oder des jeweiligen Druckwerkes 15; 16; 17; 18; 23; 24; 25; 26 von externer Stelle E₁ abrufbar und neue Kenndaten 33; 34 und Informationen von der externe Stelle E₁ der Rechen- und/oder Speichervorrichtung 3 übermittelbar sind (siehe Fig. 3).

Somit können die Daten oder Kenndaten 33; 34, beispielsweise Herstellungsdaten und individuell bei der Herstellung entstehende Informationen, einer neuen Gummizylinderhülse 2 vom Gummizylinderhülsenhersteller über die extern zugängliche Schnittstelle 90 in die Rechen- und/oder Speichervorrichtung 3 der Vorrichtung 1 übermittelt und dort abgespeichert werden.

Für den Gummizylinderhersteller und den Druckmaschinenhersteller ergibt sich mittels der extern zugänglichen Schnittstelle 90 der Vorteil, dass die in der Rechen- und/oder Speichervorrichtung 3 abgespeicherten und verwalteten Kenndaten 33; 34 und Informationen über die Gummizylinderhülsen 2, die Produktionsdaten und die Maschinendaten dem jeweiligen Hersteller Aufschluß über die Qualität, über mögliche oder reale Ausfallursachen und über das Verhalten im Produktionseinsatz seiner Produkte geben.

Der Hersteller ist somit auf Grund dieser ihm übermittelten Daten und Informationen in der Lage, Qualitätsverbesserungen an den beim Kunden bereits aufgestellten, an zum Kunden ausgelieferten oder auch an neuen Druckmaschinen, Druckwerken oder Gummizylinderhülsen vorzunehmen.

Darüber hinaus kann der Hersteller sich eine zentrale Datenbank aufbauen, welche alle beim Kunden anfallende bzw. ermittelte und über die externe Schnittstelle übermittelte oben genannten Kenndaten und Informationen enthält.

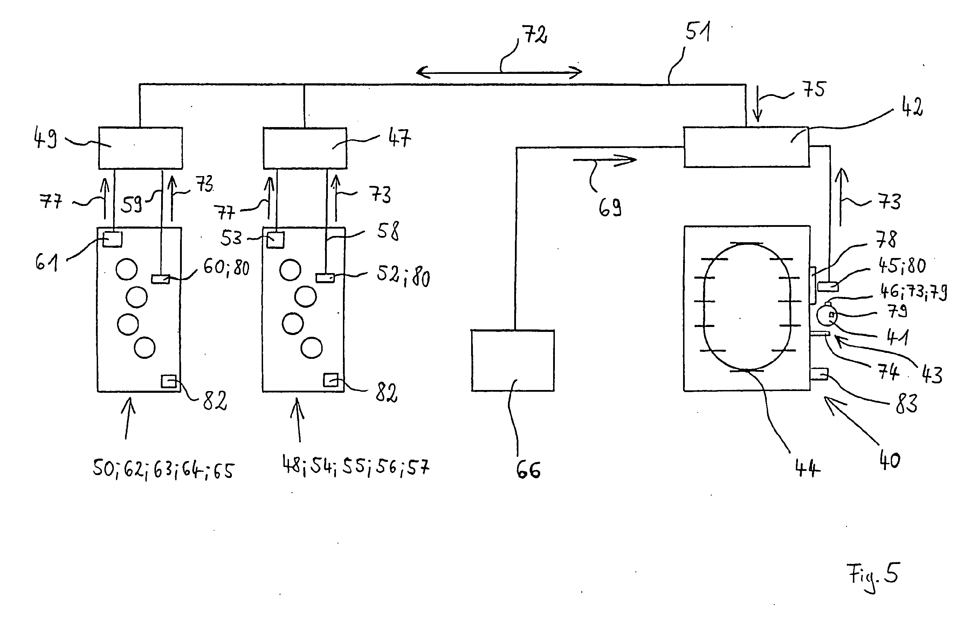

In Fig. 5 ist eine Vorrichtung 40 zur Einlagerung von Gummizylinderhülsen 41 gezeigt, die mit einer Speichervorrichtung 42 verbunden ist.

Die Vorrichtung 40 ist beispielsweise als magazinartiges oder paternosterartiges Lager oder Hochregallager ausgeführt.

Die Vorrichtung 40 weist eine Vielzahl von Lagerplätzen 44 auf, die hintereinander, überanander und/oder nebeneinander in der Vorrichtung 40 angeordnet sind, wobei der jeweilige Lagerplatz 44 an eine Aus- und Einlagerungsposition 43 verbringbar ist. Im Bereich der Aus- und Einlagerungsposition 43 sind Datenlesegeräte 45 stationär an der Vorrichtung 1 angebracht.

Mit diesen Datenlesegeräten 45 lassen sich an den Gummizylinderhülsen 41 befindliche Speichervorrichtungen 46 lesen.

Die Speichervorrichtung 46 ist als Transponder ausgestaltet. Die Speichervorrichtung 46 kann, nicht näher dargestellt, alternativ auch ein Magnetstreifen, ein Speicherchip oder dergleichen sein.

Alternativ kann statt der Speichervorrichtung 46 auch nur eine Kennzeichnung 79 auf der Gummizylinderhülse 41 angebracht sein. Die Kennzeichnung 79 kann auf der Innenseite der Gummizylinderhülse 41 eingebrannt sein oder eine anderweitige Beschriftung oder Kennzeichnung sein, beispielsweise in Form eines Barcode, welcher auf der Oberfläche oder an einer der Stirnseiten der Gummizylinderhülse 41 angeordnet ist.

Das Datenlesegerät 45 ist in diesem Falle dann beispielsweise als Scanner 80 ausgestaltet. Mit diesem Scanner 80 ist die jeweilige Kennzeichnung 79 erkennbar und die durch die Kennzeichnung 79 codierte Information, beispielsweise die Identitäts-Nummer der Gummizylinderhülse, lesbar.

Werden Kennzeichnungen 79 verwendet, die von keinem maschinellen Datenlesegarät, beispielsweise dem Datenlesegerät 45 oder dem Scanner 80, lesbar oder erkennbar sind, dann sind an jeweiligen Druckwerken 54 bis 57; 62 bis 65 und an der Vorrichtung 40 Eingabevorrichtungen 82; 83 angeordnet. Der die Druckmaschine zu bedienende Drucker kann mittels der Eingabevorrichtungen 82; 83 die auf der Gummizylinderhülse 41 aufgebrachte Kennzeichnung 79 manuell eingeben.

Die Datenlesegeräte 45 können alternativ auch als Datenaustauschgeräte ausgestaltet sein, wobei mit diesen Datenaustauschgeräten ein lesen und beschreiben von Speichervorrichtungen 46 möglich ist.

Die Speichervorrichtung 42 der Vorrichtung 40 ist datenaustauschend mit einer Rechen- und Speichervorrichtung 47 einer ersten Druckmaschine 48 und mit einer Rechen- und Speichervorrichtung 49 einer weiteren Druckmaschine 50 verbunden. Mit der Speichervorrichtung 42 der Vorrichtung 40 kann eine beliebige Anzahl von Speichervorrichtungen und beliebige Anzahl von Druckmaschinen über Datenleitungen 51 datenaustauschend verbunden sein.

Die Rechen- und Speichervorrichtung 47 der Druckmaschine 48 ist über Datenleitungen 58 mit Datenlesegeräten 52 und Zählerausgängen 53 der einzelnen Druckwerke 54; 55; 56; 57 der Druckmaschine 48 verbunden.

Die Rechen- und Speichervorrichtung 49 der Druckmaschine 50 ist über Datenleitungen 59 mit Datenlesegeräten 60 und Zählerausgängen 61 der einzelnen Druckwerke 62; 63; 64; 65 der Druckmaschine 50 verbunden.

Die Datenlesegeräte 52; 60 können alternativ auch als Datenaustauschgeräte ausgestaltet sein, wobei mit diesen Datenaustauschgeräten ein lesen und beschreiben von Speichervorrichtungen 46 möglich ist.

Die Rechen- und Speichervorrichtungen 47; 49 können ein Leitstand, eine Maschinensteuerung oder ein zentraler Rechner der Druckmaschine 48; 50 sein. Alternativ kann die Speichervorrichtung 42 der Vorrichtung 40 in mindestens eine der Rechen- und Speichervorrichtungen 47; 49 integriert sein oder durch mindestens eine der Rechen- und Speichervorrichtungen 47; 49 ersetzt werden. Sämtliche Rechen- und Speichervorrichtungen 42; 47; 49 können auch als eine Speichereinheit 81 ausgeführt sein.

An der Aus- und Einlagerungsposition 43 der Vorrichtung 40 kann eine Vorrichtung zur Kennzeichnung 78 der auszulagernden Gummizylinderhülsen 41 angeordnet sein. Mit dieser Vorrichtung zur Kennzeichnung 78 läßt sich beispielsweise ein Etikett, eine Bezeichnung, ein Code oder ein Aufdruck auf die auszulagernde Gummizylinderhülse 41 aufbringen. Somit ist eine Bezeichnung für das für die Gummizylinderhülse vorbestimmte Druckwerk unabhängig von der beispielsweise in der Speichervorrichtung 46 datentechnisch hinterlegten Identitäts-Nummer der Gummizylinderhülse 41 auf diese Gummizylinderhülse 41 aufbringbar. Mittels dieser von der Vorrichtung zur Kennzeichnung 78 aufgebrachten Bezeichnung wird dem die Druckmaschine bedienenden Drucker das Auffinden des vorbestimmten und auf dem Etikett oder der Bezeichnung eindeutig identifizierbaren Druckwerkes erleichtert.

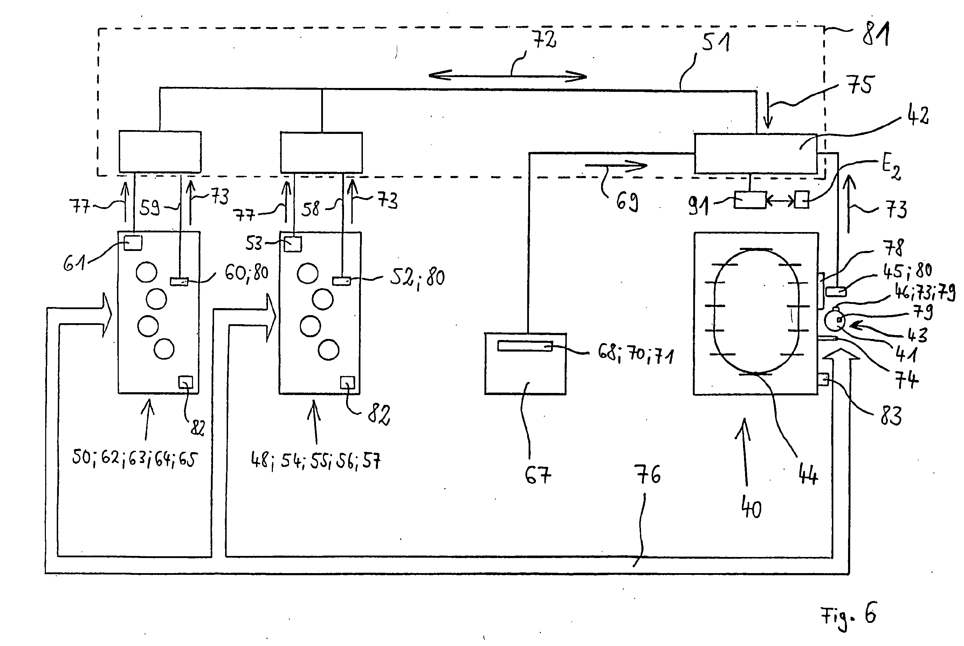

Beim Auslagern und Bereitstellen der Gummizylinderhülse 41 aus der Vorrichtung 40 kann mittels einer Transportvorrichtung 76 ein automatischer Transport von der Vorrichtung 1 zur jeweiligen Druckmaschine 48; 50 und/oder zum jeweiligen Druckwerk 54 bis 57; 62 bis 65 erfolgen (siehe Fig. 6). Alternativ kann die Transportvorrichtung 76 derart angeordnet sein, dass ein Transport der Gummizylinderhülse 41 von der Aus- und Einlagerungsposition zur jeweiligen Druckmaschine 48; 50 und/oder zum jeweiligen Druckwerk 54 bis 57; 62 bis 65 erfolgen kann.

Mit der Transportvorrichtung 76 kann auch ein Transport der Gummizylinderhülse 41 von der jeweiligen Druckmaschine 48; 50 und/oder vom jeweiligen Druckwerk 54 bis 57; 62 bis 65 zur Vorrichtung 1 oder zur Aus- und Einlagerungsposition 43 der Vorrichtung 1 erfolgen.

Vor dem Einlagern in die Vorrichtung 40 muß der die Druckmaschine bedienende Drucker den Schadenstatus der jeweiligen Gummizylinderhülse 41 beurteilen. Die Eingabe und Übermittlung seiner Beurteilung über Beschädigungen und somit den aus den Beschädigungen resultierenden Schadenstatus erfolgt vom die Druckmaschine bedienenden Drucker direkt über ein als Bedienpult und/oder Tatstatur ausgestaltetes Handeingabegerät 66. Das Handeingabegerät 66 kann mit der Speichervorrichtung 42 datenaustauschend verbunden sein (siehe Fig. 5).

In Fig. 6 ist eine Vorrichtung 67 zur Beurteilung und Erfassung des Schadenstatus der jeweiligen Gummizylinderhülse 41 gezeigt. Hier erfolgt keine Beurteilung des Schadensstautus durch den die Druckmaschine bedienenden Drucker, sondern die Vorrichtung 67 übernimmt diese Aufgabe.

Die Vorrichtung 67 kann, nicht näher dargestellt, eine elektromechanisch ausgestaltete Vorrichtung sein, wobei mechanische Sensoren 68 die Oberfläche der Gummizylinderhülse abtasten und diese mechanischen Signale in elektronische Daten 69 umwandelt, wobei diese den Schadenstatus definierenden elektronischen Daten 69 dann der Speichervorrichtung 42 automatisch übermittelt werden.

Alternativ kann die Vorrichtung 67 auch als eine elektronische oder optoelektronische (optische und elektronische) Vorrichtung ausgestaltet sein, wobei die Oberfläche der Gummizylinderhülse 41 beispielsweise durch Schallwellen aussendenden Sensoren 70, beispielsweise Ultraschall, oder Lichtstrahlen aussenden Sensoren 71, beispielsweise Infrarot oder Laser, abgetastet und überprüft wird. Die den Schadenstatus definierenden elektronischen Daten 69 werden dann wieder der Speichervorrichtung 42 automatisch übermittelt. Die Funktionsweise der Vorrichtung 40 soll im Nachfolgenden am Vorgang des Einlagerns einer Gummizylinderhülse und des Bereitstellens bzw. Auslagerns einer Gummizylinderhülse näher erläutert werden.

### Einlagern einer Gummizylinderhülse:

Der die Druckmaschine bedienende Drucker startet durch einen Tastendruck am Leitstand oder der Rechen- und Speichervorrichtung 47; 49 der Druckmaschine 48; 50 den Datenaustausch zwischen der Rechen- und Speichervorrichtung 47; 49 und der Speichervorrichtung 42.

Zum Datenaustausch werden Kenndaten 72 der jeweiligen in den Druckwerken 54 bis 57; 62 bis 65 befindlichen Gummizylinderhülse 41 unter Einbeziehung einer auf der Speichervorrichtung 46 der Gummizylinderhülse aufgebrachten Identitäts-Nummer 73 und unter Einbeziehung eines von den Zählerausgängen 53; 61 an die Rechnen- und Speichervorrichtung 47; 49 übermittelten Zählerstandes 77 von der Rechen- und Speichervorrichtung 47; 49 an die Speichervorrichtung 42 übermittelt.

Von der an der Gummizylinderhülse 41 angeordneten Speichervorrichtung 46 wird mittels der stationär in den einzelnen Druckwerken 54 bis 57; 62 bis 65 angeordneten Datenlesegeräten 52; 60 die Identitäts-Nummer 73 gelesen.

Das stationäre Datenlesegerät 52; 60 ist in unmittelbarer Nähe der Speichervorrichtung 46 angeordnet.

Die Zählerausgänge 53; 61 der einzelnen Druckwerke 54 bis 57; 62 bis 65 sind mit einer Maschinensteuerung oder einem Leitrechner der Maschine oder einer Rechen- und Speichereinheit 47; 49, die beispielsweise in Form eines Computers ausgestaltet sind, verbunden.

Die Datenlesegeräte 52; 60 sind mit einer Maschinensteuerung oder einem Leitrechner der Maschine oder einer Rechen- und Speichereinheit 47; 49, die beispielsweise in Form eines Computers ausgestaltet sind, verbunden.

Die unter den Speichervorrichtungen 42; 47; 49 auszutauschenden oder zu übertragenden die Gummizylinderhülse 41 kennzeichnenden Kenndaten 72 ergeben sich aus von den Zählerausgängen 53; 61 der einzelnen Druckwerke 54 bis 57; 62 bis 65 ermittelten Informationen, sowie der sich aus dem Druckvorgang ergebenden Informationen, beispielsweise Betriebsdaten und Maschinendaten. Darüber hinaus umfassen die unter den Speichervorrichtungen 42; 47; 49 auszutauschenden oder zu übertragenden die Gummizylinderhülse 41 kennzeichnenden Kenndaten 72 bereits bei der Gummizylinderherstellung und Qualitätsprüfung resultierende und auf der Speichervorrichtung 46 der Gummizylinderhülse 41 abgespeicherte, die Gummizylinderhülse individuell kennzeichnenden Daten und Informationen.

Die Kenndaten 72 werden von der Maschinensteuerung oder von dem Leitrechner der Maschine oder der Rechen- und Speichereinheit 47; 49 automatisch an die Speichervorrichtung 42 übermittelt.

Bei den Kenndaten 72 handelt es sich beispielsweise um die Identitäts-Nummer 73 der Gummizylinderhülse 41, die Bezeichnung der Gummizylinderhülse 41, Herstellungsdaten, Lebensdauer und Einsatzzeit, während des Druckeinsatzes aufgetretene Fehler, Art und Anzahl der Druckbilder und weitere drucktechnische Randinformationen, wie beispielsweise Produktionsinformationen.

Die oben genannten Produktionsinformationen sind beispielsweise Daten und Informationen über die Anzahl der Waschzyklen, Bahnbreite, Flächengewicht, Bruttoexemplarzahl und mittlere Drehzahl.

Weitere Kenndaten 72 sind beispielsweise Prüfdaten, Lieferdaten, sowie erster und letzter Einsatztag. Nach Lebensdauerende wird der Ausfallgrund und die Anzahl der Gesamtüberrollungen abgespeichert.

Unter den Prüfdaten sind physikalische und geometrische Testwerte, wie beispielsweise Steifigkeitswerte, Gesamtdicke und Materialstärke der Gummizylinderhülse 41, sowie Durchmesser und Rauhigkeitsangaben zu verstehen.

Nach dem Übertragen der Identitäts-Nummer 73 auf die Speichervorrichtungen 42; 47; 49 kann die Gummizylinderhülse 41 aus dem Druckwerk entnommen werden.

Der die Druckmaschine bedienende Drucker muß nun den Schadenstatus anhand von auftretenden Beschädigungen an der Oberfläche der Gummizylinderhülse 41 ermitteln.

Die Daten 69 über den Schadenstatus der jeweiligen Gummizylinderhülse 41 werden vom die Druckmaschine bedienenden Drucker direkt über ein als Bedienpult und/oder als Tastatur ausgestaltetes Handeingabegerät 66 in die Speichervorrichtung 42 eingegeben (siehe Fig. 5).

Das Handeingabegerät 66 kann, nicht näher dargestellt, auch mit einer der Rechen- und Speichervorrichtungen 47; 49 verbunden sein, wobei die Daten 69 über den Schadenstatus von der jeweiligen Rechen- und Speichervorrichtung 47; 49 auf die Speichervorrichtung 42 übertragen werden.

Alternativ kann der Schadenstatus der jeweiligen Gummizylinderhülse 41 mittels einer Vorrichtung 67 ermittelt werden (siehe Fig. 6). Der die Druckmaschine bedienende Drucker legt die zu prüfende Gummizylinderhülse 41 in die Vorrichtung 67 ein, wobei die Vorrichtung 67 die Oberfläche der Gummizylinderhülse 41 mittels Sensoren 68; 70; 71 nach Beschädigungen überprüft. Die von den Sensoren 68; 70; 71 ermittelten Informationen werden in elektronische Daten 69 umgewandelt und diese Daten 69, die Auskunft über den Schadenstatus der jeweiligen Gummizylinderhülse 41 geben, werden dabei von der Vorrichtung 67 automatisch in die Speichervorrichtung 42 übertragen.

Die Gummizylinderhülse 41 wird nun zu der Vorrichtung 40 gebracht, um eingelagert zu werden. Die Gummizylinderhülse 41 wird auf ein an der Aus- und Einlagerungsposition 43 der Vorrichtung 40 angeordnetes Auflageelement 74 gelegt.

Die an der Aus- und Einlagerungsposition 43 der Vorrichtung 40 angeordneten Datenlesegeräte 45 lesen die auf der Speichervorrichtung 46 der Gummizylinderhülse 41 gespeicherte Identitäts-Nummer 73 aus und übermittelen diese der Speichervorrichtung 42. In der Speichervorrichtung 42 wird gemäß der von der einzulagernden Gummizylinderhülse 41 eingelesenen Identitäts-Nummer 73 dort nach den abgespeicherten Kenndaten 72 gesucht und die jeweils dazugehörenden Daten 69 des Schadenstatus zu diesen Kenndaten 72 hinzugefügt.

Anschließend wird die Gummizylinderhülse 41 in einen unbesetzten Lagerplatz 44 eingelagert, der vorher an die Aus- und Einlagerungsposition 43 verbracht wurde. Der Lagerplatz 44 wird mit der zuvor ausgelesenen Identitäts-Nummer 73 zu den in der Speichervorrichtung 42 bereits abgelegten Kenndaten 72 abgespeichert.

Somit sind die Kenndaten 72 der in die Vorrichtung 40 eingelagerten Gummizylinderhülse 41 in der Speichervorrichtung 42 aktualisiert und abgespeichert. Die in der Speichervorrichtung 42 abgespeicherten und abrufbaren Kenndaten 72 umfassen also neben der Angabe des Lagerplatzes 44 die Daten 69 des Schadenstatus, die Gummizylinderhülse individuell kennzeichnende Daten und Betriebsdaten.

Die in der Speichervorrichtung 42 abgespeicherten und abrufbaren die Gummizylinderhülse 41 kennzeichnenden Kenndaten 72 ergeben sich aus von den Zählerausgängen 53; 61 der einzelnen Druckwerke 54 bis 57; 62 bis 65 ermittelten Informationen, sowie der sich aus dem Druckvorgang ergebenden Informationen, beispielsweise Betriebsdaten und Maschinendaten. Darüber hinaus umfassen die in der Speichervorrichtung 42 abgespeicherten und abrufbaren Kenndaten 72 bereits bei der Gummizylinderherstellung und Qualitätsprüfung resultierende und somit die Gummizylinderhülse individuell kennzeichnenden Daten und Informationen.

Bei einer Verwendung von Datenübertragungsgeräten anstelle der Datenlesegeräte 45 kann der Lagerplatz 44 zusätzlich noch auf der Speichervorrichtung 46 der Gummizylinderhülse 41 abgespeichert werden.

Auslagern bzw. Bereitstellen einer Gummizylinderhülse:
Über den Leitstand, die Maschinensteuerung, den Leitrechner der Maschine und/oder die Rechen- und Speichereinheit 47; 49 werden Daten 75 eines Druckauftrages an die Speichereinrichtung 42 der Vorrichtung 40 übermittelt.
Aus diesen Daten 75 sucht die Speichervorrichtung 42 eine geeignete in der Vorrichtung 40 eingelagerte Gummizylinderhülse 41, welche sowohl für den Druckauftrag, als auch für das jeweilige Druckwerk 54 bis 57; 62 bis 65 gemäß der in der Speichervorrichtung 42 abgespeicherten Kenndaten 72 der eingelagerten Gummizylinderhülsen 41 geeignet ist und die gestellten aus den Daten 75 sich ergebenden Anforderungen erfüllt.

Steht keine geeignete gebrauchte Gummizylinderhülse 41 zur Verfügung, so wird eine in der Vorrichtung 40 eingelagerte neue und noch nicht im Produktionseinsatz gewesene Gummizylinderhülse 41 von der Speichervorrichtung 42 ausgewählt. Wird eine geeignete Gummizylinderhülse 41 im Datenbestand der Speichervorrichtung 42 gefunden, so verbringt die Vorrichtung 40 den Lagerplatz 44 dieser Gummizylinderhülse 41 an die Aus- und Einlagerungsposition 43. Dort kann dann die Gummizylinderhülse 41 vom die Druckmaschine bedienenden Drucker entnommen werden.

Vor, während oder unmittelbar nach dem Verbringen des die Gummizylinderhülse 41 beinhaltenden Lagerplatz 44 an die Aus- und Einlagerungsposition 43 werden die in der Speichervorrichtung 42 gespeicherten Kenndaten 72 der Gummizylinderhülse 41 der Rechen- und Speichervorrichtung 47; 49 der jeweiligen Druckmaschine 48; 50 zugeleitet.

An der Aus- und Einlagerungsposition 43 kann mittels der Vorrichtung zur Kennzeichnung 78 beispielsweise ein Etikett, eine Bezeichnung, ein Code oder ein Aufdruck auf die bereitzustellende und auszulagernde Gummizylinderhülse 41 aufgebracht werden, womit eine Bezeichnung oder ein Hinweis für das für den Einsatz der Gummizylinderhülse 41 vorbestimmte Druckwerk 54 bis 57; 62 bis 65 unabhängig vom Dateninhalt der Speichervorrichtung 46 auf die Gummizylinderhülse 41 aufbringbar ist. Dadurch wird dem die Druckmaschine bedienenden Drucker das Auffinden des für den Einsatz der Gummizylinderhülse 41 vorbestimmten Druckwerkes 54 bis 57; 62 bis 65 erleichtert.

Beim Auslagern und Bereitstellen der Gummizylinderhülse 41 aus der Vorrichtung 40 kann mittels einer Transportvorrichtung 76 ein automatischer Transport von der Vorrichtung 40 oder von der Aus- und Einlagerungsposition 43 zur jeweiligen Druckmaschine 48; 50 und/oder zum jeweiligen Druckwerk 54 bis 57; 62 bis 65 erfolgen (siehe Fig. 6).

Die Gummizylinderhülse 41 wird in das geeignete Druckwerk 54 bis 57; 62 bis 65 eingesetzt.

Der die Druckmaschine bedienende Drucker startet durch einen Tastendruck am Leitstand oder der Rechen- und Speichervorrichtung 47; 49 der Druckmaschine 48; 50 den Datenaustausch zwischen der Speichervorrichtung 42 und der Rechen- und Speichervorrichtung 47; 49. Die Identitäts-Nummer 73 der Gummizylinderhülse 41 wird aus der Speichervorrichtung 46 der Gummizylinderhülse 41 von den in den Druckwerken 54 bis 57; 62 bis 65 angeordneten Datenlesegeräten 52; 60 gelesen und unter Einbeziehung eines von den Zählerausgängen 53; 61 übermittelten Zählerstandes 77 an die Rechnen- und Speichervorrichtung 47; 49 und/oder an die Speichervorrichtung 42 weitergeleitet.

Somit werden die Kenndaten 72 der Gummizylinderhülse 41 in der Rechen- und Speichervorrichtung 47; 49 der jeweiligen Druckmaschine 48; 50 unter Einbeziehung des Zählerstandes 77 aktualisiert und, wenn erforderlich, nochmals an die Speichervorrichtung 42 weitergeleitet.

Sollten für zukünftige Druckaufträge benötigte Gummizylinderhülsen 41 fehlen oder auf Grund der errechneten Statistik über den wahrscheinlichen Zeitpunkt des Ausfalles einer Gummizylinderhülse 41 ein Bedarf an neuen Gummizylinderhülsen 41 in Zukunft entstehen oder allein durch die Analyse der Kenndaten 72 festgestellt werden, daß ein Bedarf an neuen Gummizylinderhülsen 41 aufgrund Verschleiß oder auch unvorhergesehenen Ausfällen besteht, so können Bestellungen über die Vorrichtung 40 bzw. die Speichervorrichtung 42 automatisch ausgelöst werden.

Eine derartige Bestellung kann auch vom Leitstand, dem zentralen Rechner oder der Rechen- und Speichervorrichtung 47; 49 der Druckmaschine 48; 50 ausgelöst werden.

Bedeutungsvoll ist, dass zusätzliche Informationen, wie beispielsweise funktionsrelevante Kennzahlen, die Anzahl der Überrollungen, Produktionsinformationen, die Zeitpunkte der Konstruktion und der jeweiligen Einsätze und/oder der Ausmusterung, die Ursache für den Ausfall, Wiederverwendbarkeit, etc. direkt in Form von elektronischen Kenndaten 72 auf der Speichervorrichtung 46 der Gummizylinderhülse 41 angebracht werden können. Somit können bei Ausfall und/oder Beschädigung der Datenleitung 51 oder anderen datenaustauschenden Verbindungen zwischen den Rechen- und Speichervorrichtungen 47; 49 und der Speichervorrichtung 42 über die Speichervorrichtung 46 der jeweiligen Gummizylinderhülse 41 diese oben genannten Informationen der Druckmaschine 48; 50 und/oder der Vorrichtung 40 bzw. der Speichervorrichtung 42 der Vorrichtung 40 zur Einlagerung von Gummizylinderhülsen 41 übermittelt und gegenseitig ausgetauscht werden.

Die Speichervorrichtung 46 kann somit als Datenträger und zum Datenaustausch für die die Gummizylinderhülse 41 individuell kennzeichnenden Kenndaten 72 dienen.

Mittels dieser Kenndaten 72 kann man die Ausfallursachen bei Gummizylinderhülsen 41 ermitteln und ermöglicht so eine Bewertungsgrundlage für die einzelnen Fabrikationsmethoden oder sonstigen Herstellungsdaten von Gummizylinderhülsen 41.

Nicht näher dargestellt kann die Identifikations-Nummer 73 anstelle mittels der stationär angeordneten Datenlesegeräte 45; 52; 60 mittels eines als tragbares Handgerät ausgeführten Datenlesegerätes gelesen und an die Rechen- und Speichervorrichtung 47; 49 oder Speichervorrichtung 42 übermittelt werden.

Die Vorrichtung 40 und die dazugehörige Speichervorrichtung 42 kann darüber hinaus auch zur Beurteilung von Druckqualität und Verschleiß von Gummizylinderhülsen 41 eingesetzt werden und soll sich nicht nur auf die Anwendung zur Einlagerung und Bereitstellung von Gummizylinderhülsen 41 beschränken.

Besonders zu erwähnen ist, dass die Rechen- und/oder Speichervorrichtung 42 der Vorrichtung 40 mit einer Schnittstelle 91 ausgestattet ist, welche von externer Stelle E₂ aus anzapfbar ist, wobei über diese Schnittstelle 91 die Kenndaten 72 und die Informationen der jeweiligen Gummizylinderhülse 41 und die Daten und die Informationen über den Produktionsablauf, die Einsatzbedingungen und Prozessdaten der jeweiligen Druckmaschine 48; 50 und/oder des jeweiligen Druckwerkes 54; 55; 56; 57; 62; 63; 64; 65 von externer Stelle E₂ abrufbar und neue Kenndaten 72 und Informationen von der externe Stelle E₂ der Rechen- und/oder Speichervorrichtung 42 übermittelbar sind (siehe Fig. 6).

Somit können die Daten oder Kenndaten 72, beispielsweise Herstellungsdaten und individuell bei der Herstellung entstehende Informationen, einer neuen Gummizylinderhülse 41 vom Gummizylinderhülsenhersteller über die extern zugängliche Schnittstelle 91 in die Rechen- und/oder Speichervorrichtung 42 der Vorrichtung 40 übermittelt und dort abgespeichert werden.

Für den Gummizylinderhersteller und den Druckmaschinenhersteller ergibt sich mittels der extern zugänglichen Schnittstelle 91 der Vorteil, dass die in der Rechen- und/oder Speichervorrichtung 42 abgespeicherten und verwalteten Kenndaten 72 und Informationen über die Gummizylinderhülsen 41, die Produktionsdaten und die Maschinendaten dem jeweiligen Hersteller Aufschluß über die Qualität, über mögliche oder reale Ausfallursachen und über das Verhalten im Produktionseinsatz seiner Produkte geben.

Der Hersteller ist somit auf Grund dieser ihm übermittelten Daten und Informationen in der Lage, Qualitätsverbesserungen an den beim Kunden bereits aufgestellten, an zum Kunden ausgelieferten oder auch an neuen Druckmaschinen, Druckwerken oder Gummizylinderhülsen vorzunehmen.

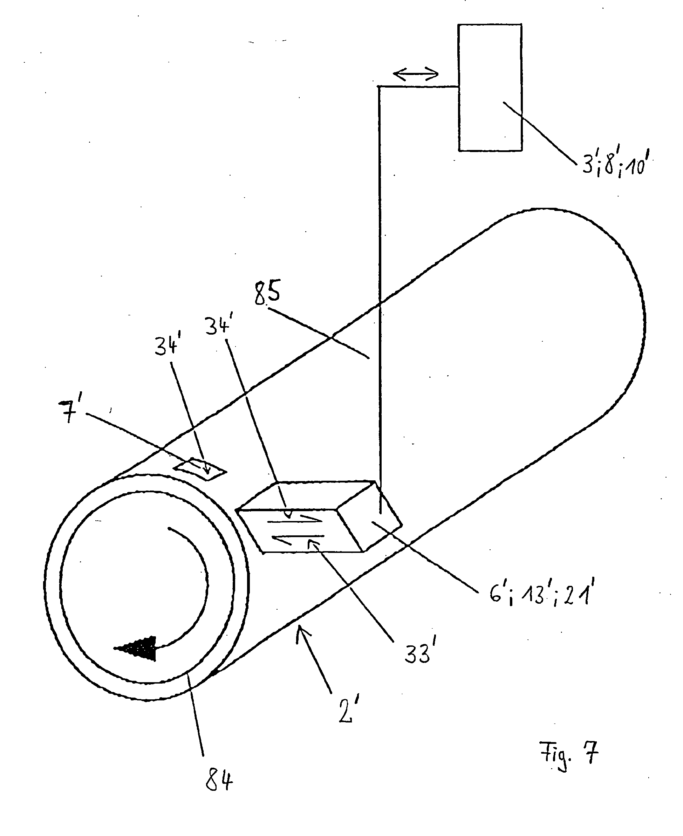

In Fig. 7 ist eine Gummizylinderhülse 2' gezeigt, die eine Trägerhülse 84 aufweist, auf der eine Gummischicht 85 aufvulkanisiert oder aufgeklebt ist. Die Gummischicht 85 ist vorteilhaft kompressibel ausgestaltet und kann, nicht näher dargestellt, aus mehreren unterschiedlichen Schichten und/oder Werkstoffen bestehen.

Eine derartige Beschichtung ist beispielsweise in der EP 0 819 550 A2 gezeigt.

Die Gummischicht 85 weist an ihrer Oberfläche eine nicht näher dargestellte Deckschicht auf, mit der im Offsetdruckverfahren gedruckt werden kann.

Als Trägerhülse 84 wird vorzugsweise eine Metallhülse, beispielsweise aus Nickel, Stahl oder Aluminium, oder eine Kunststoffhülse, beispielsweise aus Carbonfaser-Kunststoff, verwendet.

In einem Randbereich der Gummischicht 85, vorzugsweise in einem nicht druckenden Bereich der Gummischicht 85, ist eine als Transponder ausgestaltete elektronische Speichervorrichtung 7' angeordnet.

Die Speichervorrichtung 7' kann, nicht näher dargestellt, alternativ auch ein Magnetstreifen, ein Speicherchip oder dergleichen sein.

Der Transponder 7' ist vorteilhaft in die Gummischicht 85 eingelassen, also allseitig vom Werkstoff der Gummischicht 85 umgeben, so daß ein optimaler Schutz für den Transponder 86 gewährleistet ist.

Alternativ kann der Transponder 7', nicht näher dargestellt, derart am Randbereich der Gummischicht 85 angeordnet sein, dass eine Seite des Transponders 86 nicht von der Gummischicht umgeben ist und somit frei liegt.

Sowohl die Außenseite als auch die Innenseite der Gummizylinderhülse 2' ist frei von Erhöhungen ausgestaltet.

Oft liegt der Randbereich der Gummischicht 85 einige Zehntelmillimeter tiefer als der restliche Teil der Gummischicht 85. In diesem einer geringeren Belastung ausgesetztem Randbereich ist vorteilhaft der Transponder 7' angeordnet.

Dem Transponder 7' werden von einem stationär in der Druckmaschine angeordneten Datenaustauschgerät 6'; 13'; 21' Kenndaten 33' übertragen und auf dem Transponder 7' bereits befindliche Kenndaten 34' von diesem gelesen. Das stationäre Datenaustauschgerät 6'; 13'; 21' ist in unmittelbarer Nähe des Transponders 7' angeordnet.

Das Datenaustauschgerät 6'; 13'; 21' ist mit einer Maschinensteuerung oder einem Leitrechner der Maschine oder einer Rechen- und Speichereinheit 3'; 8'; 10', beispielsweise einer separaten Auswerteeinheit in Form eines Computers, verbunden.

Die Kenndaten 33' werden von der Maschinensteuerung oder von dem Leitrechner der Maschine oder der Rechen- und Speichereinheit 3'; 8'; 10' an das Datenaustauschgerät 6'; 13'; 21' gesendet und automatisch an den Transponder 7' übermittelt.

Die Kenndaten 33' werden, nicht näher dargestellt, entweder vom Bedienungsmann direkt über ein Bedienpult und/oder eine Tastatur in die Maschinensteuerung eingegeben oder von der Maschinensteuerung selbst ermittelt.

Bei den Kenndaten 33'; 34' handelt es sich beispielsweise um Herstellungsdaten, Lebensdauer und Einsatzzeit, während des Druckeinsatzes aufgetretene Fehler, Anzahl der Überrollungen, Art und Anzahl der Druckbilder und weitere drucktechnische Randinformationen.

Nicht näher dargestellt können dem Transponder 7' die Kenndaten 33'; 34' anstelle mittels des stationär angeordneten Datenaustauschgerätes 6'; 13'; 21' mittels eines als tragbares Handgerät ausgeführten Datenaustauschgerätes übermittelt und ausgetauscht werden.

Des weiteren kann der Transponder 7' und das Datenaustauschgerät 6'; 13'; 21' auch zur Beurteilung von Herstellungsmethoden, Druckqualität und Verschleiß bei Gummitüchern eingesetzt werden und soll sich nicht nur auf die Anwendung bei Gummizylinderhülsen beschränken.

Nicht näher dargestellt ist die Anordnung des Transponders 7' nicht zwingend auf dem gummibeschichteten Bereich der Trägerhülse erforderlich. Die Anordnung des Transponders 7' kann beispielsweise an den Stirnseiten der Gummischicht 85 erfolgen, wobei der Transponder 7' mit einer als Klebemittel ausgeführten Versiegelung, die zur Versiegelung der Stirnseiten der Gummischicht 85 dient, aufgeklebt wird.

Somit ist das Aufkleben des Transponders 7' oder jeder anderen Speichervorrichtung nachträglich in der Druckerei möglich.

Der Transponder 7' oder jede andere Speichervorrichtung kann an einer beliebigen Stelle der Gummizylinderhülse 2' angebracht werden, wobei der Transponder 7' mittels eines als Klebeband ausgeführten Befestigungsmittels an der Gummizylinderhülse 2' befestigbar ist.

Vorteilhafterweise kann der Transponder 7' oder die Speichervorrichtung selbstklebend oder selbstbefestigend aufgeführt sein.

Der Transponder 7' oder die Speichervorrichtung kann nicht näher dargestellt auch in die Metallschicht der Trägerhülse 84 eingebettet oder auf der Metallschicht 84 angeordnet und/oder befestigt sein.

Es ist auch möglich, dass an der Gummizylinderhülse 2' ein zusätzliches Element oder zusätzliches Mittel oder eine Verlängerung der Gummizylinderhülse 2' anordbar und befestigbar ist, an oder auf welchem der Transponder 7' oder die Speichervorrichtung anordbar und/oder befestigt ist.

### [Bezugszeichenliste]

- 1: Vorrichtung
- 2: Gummizylinderhülse
- 3: Speichervorrichtung
- 4: Aus- und Einlagerungsposition
- 5: Lagerplatz
- 6: Datenaustauschgerät
- 7: Speichervorrichtung
- 8: Rechen- und Speichervorrichtung
- 9: Druckmaschine
- 10: Rechen- und Speichervorrichtung
- 11: Druckmaschine
- 12: Datenleitung
- 13: Datenaustauschgerät
- 14: Zählerausgang
- 15: Druckwerk
- 16: Druckwerk
- 17: Druckwerk
- 18: Druckwerk
- 19: Datenleitung
- 20: Datenleitung
- 21: Datenaustauschgerät
- 22: Zählerausgang
- 23: Druckwerk
- 24: Druckwerk
- 25: Druckwerk
- 26: Druckwerk
- 27: Handeingabegerät
- 28: Vorrichtung zur Beurteilung des Schadenstatus
- 29: Sensor
- 30: Daten über den Schadenstatus
- 31: Sensor
- 32: Sensor
- 33: Kenndaten
- 34: Kenndaten
- 35: Auflageelement
- 36: Daten eines Druckauftrages
- 37: Transportvorrichtung
- 38: Zählerstand
- 39: Vorrichtung zur Kennzeichnung

- 40: Vorrichtung
- 41: Gummizylinderhülse
- 42: Speichervorrichtung
- 43: Aus- und Einlagerungsposition
- 44: Lagerplatz
- 45: Datenlesegerät
- 46: Speichervorrichtung
- 47: Rechen- und Speichervorrichtung
- 48: Druckmaschine
- 49: Rechen- und Speichervorrichtung
- 50: Druckmaschine
- 51: Datenleitung
- 52: Datenlesegerät
- 53: Zählerausgang
- 54: Druckwerk
- 55: Druckwerk
- 56: Druckwerk
- 57: Druckwerk
- 58: Datenleitung
- 59: Datenleitung
- 60: Datenlesegerät
- 61: Zählerausgang
- 62: Druckwerk
- 63: Druckwerk
- 64: Druckwerk
- 65: Druckwerk
- 66: Handeingabegerät
- 67: Vorrichtung zur Beurteilung des Schadenstatus
- 68: Sensor
- 69: Daten über den Schadenstatus
- 70: Sensor
- 71: Sensor
- 72: Kenndaten
- 73: Identitäts-Nummer
- 74: Auflageelement
- 75: Daten eines Druckauftrages
- 76: Transportvorrichtung
- 77: Zählerstand
- 78: Vorrichtung zur Kennzeichnung
- 79: Kennzeichnung
- 80: Scanner
- 81: Speichereinheit
- 82: Eingabevorrichtung
- 83: Eingabevorrichtung

- 84: Trägerhülse
- 85: Gummizylinderhülsenbeschichtung
- 90: Schnittstelle
- 91: Schnittstelle

- 2': Gummizylinderhülse
- 3': Rechen- und Speichereinheit
- 6': Datenaustauschgerät
- 7': Speichervorrichtung
- 8': Rechen- und Speichereinheit
- 10': Rechen- und Speichereinheit
- 13': Datenaustauschgerät
- 21': Datenaustauschgerät
- 33': Kenndaten
- 34': Kenndaten

- E₁; E₂: externe Stelle

## Patentansprüche

1. Druckhülsenmanagement-System , mit
- als Gummizylinderhülsen (2; 41) für den Offsetdruck ausgeführten Hülsen; und
- einer Vorrichtung (1,40) zur Einlagerung von Hülsen einer Rotationsdruckmaschine (9; 11; 48; 50) mit einer elektronischen Speichervorrichtung (3; 42), in die für jede Hülse Kenndaten (34; 72) eingebbar, speicherbar und verwaltbar sind,
wobei zur Einlagerung der Hülsen eine Vielzahl von Lagerplätzen (5, 44) vorgesehen ist,
wobei beim Einbringen jeder Hülse (2; 41) in einen Lagerplatz (5, 44) die Kenndaten (34; 72) der Hülse (2; 41) in die Speichervorrichtung (3; 42) einlesbar sind, und jede Hülse nach vorgebbaren Daten (36; 75) auswählbar und entnehmbar ist.

2. System nach Anspruch 1, **dadurch gekennzeichnet, dass** die Kenndaten (34; 72) aus die Gummizylinderhülse (2; 41) individuell kennzeichnende Daten und/oder Betriebsdaten und/oder Daten über den Schadenstatus (30; 69) bestehen.

3. System nach Anspruch 1 oder 2, **dadurch gekennzeichnet, dass** die Lagerplätze (5; 44) für die Gummizylinderhülsen (2; 41) nebeneinander und/oder übereinander und/oder hintereinander und/oder umlaufend und/oder verfahrbar angeordnet sind.

4. System nach Anspruch 3, **dadurch gekennzeichnet, dass** der einzelne Lagerplatz (5; 44) an eine Ein- und Aussagerungsposition (4; 43) verbringbar ist.

5. System nach einem der Ansprüche 1 bis 4, **dadurch gekennzeichnet, dass** eine Kennzeichnung (79) auf der Gummizylinderhülse (41) angeordnet ist, mittels derer die Kenndaten (72) zur jeweiligen Gummizylinderhülse (41) zuordbar sind und die Kenndaten (72) beim Einlagern in die elektronische Speichervorrichtung (42) einlesbar sind.

6. System nach einem der Ansprüche 1 bis 4, **dadurch gekennzeichnet, dass** eine Identitäts-Nummer (73) auf einer weitere elektronischen Speichervorrichtung (46) der Gummizylinderhülse (2) angeordnet ist, mittels derer die Kenndaten (72) zur jeweiligen Gummizylinderhülse (41) zuordbar sind und die Kenndaten (72) beim Einlagern der elektronischen Speichervorrichtung (42) einlesbar sind.

7. System nach Anspruch 6, **dadurch gekennzeichnet, dass** die Identitäts-Nummer (73) beim Einlagern von der weiteren elektronischen Speicher-vorrichtung (46) in die elektronische Speichervorrichtung (42) einlesbar ist.

8. System nach einem der Ansprüche 1 bis 4, **dadurch gekennzeichnet, dass** die Kenndaten (72) der Gummizylinderhülse (41) auf der weiteren elektronischen Speichervorrichtung (46) abgelegt sind und die Kenndaten (72) beim Einlagern von der weiteren elektronischen Speichervorrichtung (46) in die elektronische Speichervorrichtung (42) einlesbar sind.

9. System nach Anspruch 5, **dadurch gekennzeichnet, dass** mittels eines bei den Lagerplätzen (5, 44) angeordneten Datenlesegerätes (45) oder Scanners (80) die Kennzeichnung (79) in die elektronische Speichervorrichtung (3) lesbar und die zur Kennzeichnung (40) zuordbaren Kenndaten (72) und/oder geänderte Kenndaten (72) und/oder Daten (69) zwischen den Speichervorrichtungen (42; 47; 49) austauschbar und auf die jeweilige Speichervorrichtung (42; 47; 49) schreibbar und speicherbar sind.

10. System nach Anspruch 6, **dadurch gekennzeichnet, dass** mittels eines bei den Lagerplätzen (5, 44) angeordneten Datenlesegerätes (45) die Identitäts-Nummer (73) von der weiteren elektronischen Speichervorrichtung (46) in die elektronische Speichervorrichtung (42) lesbar und die zur Identitäts-Nummer (73) zuordbaren Kenndaten (72) und/oder geänderte Kenndaten (72) und/oder Daten (69) zwischen den Speichervorrichtungen (46; 47; 49) austauschbar und auf die jeweilige Speichervorrichtung (46; 47; 49) schreibbar und speicherbar sind.

11. System nach einem der Ansprüche 9 oder 10, **dadurch gekennzeichnet, dass** Datenlesegeräte (45; 52; 60) in und/oder an Druckwerken (54; 55; 56; 57; 62; 63; 64; 65) und der Vorrichtung (1) angeordnet sind.

12. System nach Anspruch 11, **dadurch gekennzeichnet, dass** die Datenlesegeräte (45; 52; 60) als Datenaustauschgeräte ausgestaltet sind und die Kenndaten (72) unter den Speichervorrichtungen (42; 47; 49) austauschbar und speicherbar sind.

13. System nach einem der Ansprüche 6, 7, 8, 10, 11 oder 12, **dadurch** gekennzeichent, dass die weitere elektronische Speichervorrichtung (46) als Mittel zur Datenübertragung und zum Datenaustausch zwischen den Rechen- und Speichervorrichtungen (47; 49) und der elektronischen Speichervorrichtung (42) dient.

14. System nach einem der Ansprüche 1 bis 12, **dadurch gekennzeichnet, dass** die elektronische Speichervorrichtung (42) in mindestens eine der Rechen- und Speichervorrichtungen (47; 49) integriert ist.

15. System nach einem der Ansprüche 1 bis 13, **dadurch gekennzeichnet, dass** die elektronische Speichervorrichtung (42) und die Rechen- und Speichervorrichtungen (47; 49) in mindestens eine Speichereinheit (81) integriert ist.

16. System nach einem der Ansprüche 1 bis 15, **dadurch gekennzeichnet, dass** eine Transportvorrichtung (76) einen Transport der aus der Vorrichtung (40) entnehmbaren Gummizylinderhülse (41) zum Druckwerk (54 bis 57; 62 bis 65) und/oder der Druckmaschine (48; 50) ermöglicht.

17. System nach einem der Ansprüche 1 bis 16, **dadurch gekennzeichnet, dass** eine Vorrichtung zur Kennzeichnung (78) der entnehmbaren Gummizylinderhülsen (41) an der Vorrichtung (40) angeordnet ist.

18. System nach einem der Ansprüche 2 bis 17, **dadurch gekennzeichnet, dass** die Daten über den Schadenstatus (69) der Gummizylinderhülse (41) mittels einer Vorrichtung (67) ermittelbar sind.

19. System nach einem der Ansprüche 2 bis 17, **dadurch gekennzeichnet, dass** die Daten über den Schadenstatus (69) der Gummizylinderhülse (41) manuell von einem die Druckmaschine (48; 50) bedienenden Drucker ermittelbar und in ein Handeingabegerät (66) eingebbar sind.

20. System nach einem der Ansprüche 18 oder 19, **dadurch gekennzeichnet, dass** die Daten über den Schadenstatus (69) einer der Speichervorrichtungen (42; 47; 49) übermittelbar sind.

21. System nach einem der Ansprüche 1 bis 20, **dadurch gekennzeichnet, dass** mittels der in der elektronischen Speichervorrichtung (42) abgelegten Kenndaten (72) Bestellungen von neuen Gummizyllinderhülsen (41) automatisch auslös- und durchführbar sind.

22. System nach insbesondere einem der Ansprüche 1 bis 21, **dadurch gekennzeichnet, dass** mittels der in der elektronischen Speichervorrichtung (42) abgelegten Kenndaten (72) eine Statistik über den wahrscheinlichen Ausfall von Gummizyllinderhülsen (41) berechenbar ist.

23. Verfahren zur Einlagerung von mit einer Kennzeichnung (79) ausgestatteten Hülsen, **dadurch gekennzeichnet, dass** Kenndaten (72) der als Gummizylinderhülsen (41) für Offsetdruck ausgestalteten Hülse von einer Rechen- und Speichervorrichtung (47; 49) einer Rotationsdruckmaschine (48; 50) einer elektronischen Speichervorrichtung (42) einer Vorrichtung (40) zur Einlagerung übermittelt und dort abgespeichert werden, wobei über die Kennzeichnung (79) der Gummizylinderhülse (41) die Kenndaten (72) der jeweiligen Gummizylinderhülse (41) zugeordnet werden.

24. System nach einem der Ansprüche 1 bis 4, **dadurch gekennzeichnet, dass** die Kenndaten (34) der Gummizylinderhülse (2) auf einer weiteren elektronischen Speichervorrichtung (7), die auf der Gummizylinderhülse (2) angeordnet ist, abgelegt sind und beim Einlagern von dieser Speichervorrichtung (7) in die elektronische Speichervorrichtung (3) einlesbar sind.

25. System nach Anspruch 24, **dadurch gekennzeichnet, dass** mittels eines Datenaustauschgerätes (6) die Kenndaten (34) von der weiteren elektronischen Speichervorrichtung (7) in die elektronische Speichervorrichtung (3) lesbar und neue Kenndaten (33) und/oder geänderte Kenndaten (33) und/oder Daten (30) von der elektronische Speichervorrichtung (3) auf die weitere electronische Speichervorrichtung (7) schreibbar und speicherbar sind.

26. System nach einem der Ansprüche 24 oder 25, **dadurch gekennzeichnet, dass** mittels eines in Druckwerken (15 bis 18; 23 bis 26) angeordneten Datenaustauschgerätes (13; 21) die Kenndaten (34) von der weiteren elektronischen Speichervorrichtung (7) in eine Rechen- und Speichervorrichtung (8; 10) lesbar und neue Kenndaten (33) und/oder geänderte Kenndaten (33) von der Rechen- und Speichervorrichtung (8; 10) auf die weitere elektronische Speichervorrichtung (7) schreibbar und speicherbar sind.

27. System nach einem der Ansprüche 24 bis 26, **dadurch gekennzeichnet, dass** die weitere elektronische Speichervorrichtung (7) als Mittel zum Bewerkstelligen eines Datenaustausch zwischen den Druckwerken (15 bis 18; 23 bis 26) und der Vorrichtung (1) dient, wobei der Datenaustausch mittels der weiteren elektronischen Speichervorrichtung (7) zwischen der Rechen- und Speichervorrichtung (8; 10) und der elektronischen Speichervorrichtung (3) erfolgt.

28. System nach einem der Ansprüche 1 bis 4 oder 24 bis 27, **dadurch gekennzeichnet, dass** die elektronische Speichervorrichtung (3) in mindestens eine der Rechen- und Speichervorrichtungen (8; 10) integriert ist.

29. System nach einem der Ansprüche 1 bis 4 oder 24 bis 28, **dadurch gekennzeichnet, dass** eine Transportvorrichtung (37) einen Transport der aus der Vorrichtung (1) entnehmbaren Gummizylinderhülse (2) zum Druckwerk (15 bis 18; 23 bis 26) und/oder der Druckmaschine (9; 11) ermöglicht.

30. System nach einem der Ansprüche 1 bis 4 oder 24 bis 29, **dadurch gekennzeichnet, dass** eine Vorrichtung zur Kennzeichnung (39) der entnehmbaren Gummizylinderhülsen (2) an der Vorrichtung (1) angeordnet ist.

31. System nach einem der Ansprüche 1 bis 4 oder 24 bis 30, **dadurch gekennzeichnet, dass** Daten über den Schadenstatus (30) der Gummizylinderhülse (2) mittels einer Vorrichtung (28) ermittelbar sind, wobei die Daten über den Schadenstatus (30) einer der Speichervorrichtungen (3; 8; 10) übermittelt werden.

32. System nach einem der Ansprüche 1 bis 4 oder 24 bis 30, **dadurch gekennzeichnet, dass** die Daten über den Schadenstatus (30) der Gummizyklinderhülse manuell von einem die Druckmaschine (9; 11) bedienenden Drucker ermittelbar und in eine Handeingabegerät (27) eingebbar sind, wobei die Daten über den Schadenstatus (30) mittels des Handeingabegerätes (27) einer der Speichervorrichtungen (3; 8; 10) übermittelt werden.

33. System nach einem der Ansprüche 1 bis 4 oder 24 bis 32, **dadurch gekennzeichnet, dass** mittels der in der elektronischen Speichervorrichtung (3) abgelegten Kenndaten (34) Bestellungen von neuen Gummizylinderhülsen (2) automatisch auslös- und durchführbar sind.

34. System nach einem der Ansprüche 1 bis 4 oder 24 bis 33, **dadurch gekennzeichnet, dass** mittels der in der elektronischen Speichervorrichtung (3) abgelegten Kenndaten (34) eine Statistik über den wahrscheinlichen Ausfall von Gummizylinderhülsen (2) berechenbar ist.

35. Verfahren zur Einlagerung von mit einer weiteren elektronischen Speichervorrichtung (7) ausgestatteten Hülsen, **dadurch gekennzeichnet, dass** auf die Speichervorrichtung (7) der noch in einem Druckwerk (15 bis 18; 23 bis 26) befindlichen als Gummizylinderhülse (2) für Offsetdruck ausgeführten Hülse Kenndaten (33) aufgebracht werden und die Kenndaten (33; 34) dann bei der Einlagerung in eine Vorrichtung (1) einer elektronischen Speichervorrichtung (3) der Vorrichtung (1) übermittelt werden.

36. Gummizylinderhülse zur Verwendung in einem System nach einem der vorangehenden Ansprüche mit einer weiteren elektronischen die Speichervorrichtung (7'), **dadurch gekennzeichnet, dass** sie im nicht druckenden Randbereich der Gummischicht (85) angeordnet ist.

37. System nach einem der Ansprüche 12 bis 34, **dadurch gekennzeichnet, dass** das Datenaustauschgerät (6'; 13'; 21') mit einer Rechen- und Speichereinheit (3'; 8'; 10') in Verbindung steht, in der Kenndaten (33'; 34') berechenbar sind.

38. System nach einem der Ansprüche 12 bis 34, **dadurch gekennzeichnet, dass** das Datenaustauschgerät (6'; 13'; 21') mit der Maschinensteuerung einer Druckmaschine in Verbindung steht.

39. System nach einem der Ansprüche 1 bis 22, **dadurch gekennzeichnet, dass** die elektronische Speichervorrichtung (3) eine Schnittstelle (90) aufweist, die von externer Stelle (E₁) aus zugänglich ist.

40. System nach Anspruch 39, **dadurch gekennzeichnet, dass** die in der elektronischen Speichervorrichtung (3) abgelegten Kenndaten (34) über die Schnittstelle (90) von der externen Stelle (E₁) abrufbar und neue Kenndaten (34) über die Schnittstelle (90) in die Speichervorrichtung (3) übermittelbar und abspeicherbar sind.

41. System nach einem der Ansprüche 1 bis 4 oder 24 bis 34, **dadurch gekennzeichnet, dass** die elektronische Speichervorrichtung (42) eine Schnittstelle (91) aufweist, die von externer Stelle (E₂) aus zugänglich ist.

42. System nach Anspruch 41 **dadurch gekennzeichnet, dass** die in der elektronischen Speichervorrichtung (42) abgelegten Kenndaten (72) über die Schnittstelle (91) von der externen Stelle (E₂) abrufbar und neue Kenndaten (72) über die Schnittstelle (91) in die Speichervorrichtung (42) übermittelbar und abspeicherbar sind.

## Claims

1. A printing-sleeve management system having
- sleeves realized as blanket-cylinder sleeves (2; 41) for offset printing; and
- a device (1, 40) for storing sleeves of a rotary printing machine (9; 11; 48; 50) having an electronic memory device (3; 42) into/in which characteristic data (34; 72) can be input, saved and administered for each sleeve,
wherein a plurality of storage places (5, 44) are provided for the storage of the sleeves, wherein when each sleeve (2; 41) is introduced into a storage place (5, 44) the characteristic data (34; 72) of the sleeve (2; 41) can be read into the memory device (3; 42), and each sleeve can be selected and removed in accordance with predeterminable data (36; 75).

2. A system according to claim 1, **characterised in that** the characteristic data (34; 72) consist of data individually characterising the blanket-cylinder sleeve (2; 41) and/or operating data and/or data concerning the damage status (30; 69).

3. A system according to claim 1 or 2, **characterised in that** the storage places (5; 44) for the blanket-cylinder sleeves (2; 41) are arranged side by side and/or one on top of the other and/or one behind the other and/or in a rotating manner and/or in a movable manner.

4. A system according to claim 3, **characterised in that** the individual storage place (5; 44) can be brought to a position (4; 43) for storage and withdrawal from storage.

5. A system according to one of claims 1 to 4, **characterised in that** there is provided on the blanket-cylinder sleeve (41) a marking (79) by means of which the characteristic data (72) can be associated with the respective blanket-cylinder sleeve (41), and the characteristic data (72) can be read into the electronic memory device (42) upon storage.

6. A system according to one of claims 1 to 4, **characterised in that** an identity number (73) is provided on a further electronic memory device (46) of the blanket-cylinder sleeve (2), by means of which the characteristic data (72) can be associated with the respective blanket-cylinder sleeve (41), and the characteristic data (72) can be read into the electronic memory device (42) upon storage.

7. A system according to claim 6, **characterised in that** the identity number (73) can be read from the further electronic memory device (46) into the electronic memory device (42) upon storage.

8. A system according to one of claims 1 to 4, **characterised in that** the characteristic data (72) of the blanket-cylinder sleeve (41) are filed on the further electronic memory device (46), and the characteristic data (72) can be read from the further electronic memory device (46) into the electronic memory device (42) upon storage.

9. A system according to claim 5, **characterised in that** by means of a data-reading unit (45) or scanner (80) that is arranged in the storage places (5, 44) the marking (79) can be read into the electronic memory device (3), and the characteristic data (72) that can be associated with the marking (40) and/or amended characteristic data (72) and/or data (69) can be exchanged between the memory devices (42; 47; 49) and can be written onto the respective memory device (42; 47; 49) and saved.

10. A system according to claim 6, **characterised in that** by means of a data-reading unit (45) that is arranged in the storage places (5, 44) the identity number (73) can be read from the further electronic memory device (46) into the electronic memory device (42), and the characteristic data (72) that can be associated with the identity number (73) and/or amended characteristic data (72) and/or data (69) can be exchanged between the memory devices (46; 47; 49) and can be written onto the respective memory device (46; 47; 49) and saved.

11. A system according to one of claims 9 or 10, **characterised in that** data-reading units (45; 52; 60) are arranged in and/or on printing units (54; 55; 56; 57; 62; 63; 64; 65) and the device (1).

12. A system according to claim 11, **characterised in that** the data-reading units (45; 52; 60) are configured as data-exchange units, and the characteristic data (72) can be exchanged amongst the memory devices (42; 47; 49) and saved.

13. A system according to one of claims 6, 7, 8, 10, 11 or 12, **characterised in that** the further electronic memory device (46) serves as a means for data-transfer and for data-exchange between the computing and memory devices (47; 49) and the electronic memory device (42).

14. A system according to one of claims 1 to 12, **characterised in that** the electronic memory device (42) is integrated into at least one of the computing and memory devices (47; 49).

15. A system according to one of claims 1 to 13, **characterised in that** the electronic memory device (42) and the computing and memory devices (47; 49) are integrated into at least one memory unit (81).

16. A system according to one of claims 1 to 15, **characterised in that** a transporting device (76) renders possible transportation of the blanket-cylinder sleeve (41), which can be removed from the device (40), to the printing unit (54 to 57; 62 to 65) and/or the printing machine (48; 50).

17. A system according to one of claims 1 to 16, **characterised in that** a device for characterising (78) the removable blanket-cylinder sleeves (41) is arranged on the device (40).

18. A system according to one of claims 2 to 17, **characterised in that** the data concerning the damage status (69) of the blanket-cylinder sleeve (41) can be determined by means of a device (67).

19. A system according to one of claims 2 to 17, **characterised in that** the data concerning the damage status (69) of the blanket-cylinder sleeve (41) can be determined manually by a printer operating the printing machine (48; 50) and can be input into a manual input unit (66).

20. A system according to one of claims 18 or 19, **characterised in that** the data concerning the damage status (69) can be transmitted to one of the memory devices (42; 47; 49).

21. A system according to one of claims 1 to 20, **characterised in that** orders for new blanket-cylinder sleeves (41) can be automatically triggered and implemented by means of the characteristic data (72) that are filed in the electronic memory device (42).

22. A system according to in particular one of claims 1 to 21, **characterised in that** statistics concerning the probable failure of blanket-cylinder sleeves (41) can be calculated by means of the characteristic data (72) that are filed in the electronic memory device (42).

23. A method for storing sleeves that are equipped with a marking (79), **characterised in that** characteristic data (72) pertaining to the sleeve that is configured as a blanket-cylinder sleeve (41) for offset printing are transmitted from a computing and memory device (47; 49) of a rotary printing machine (48; 50) to an electronic memory device (42) of a device (40) for storage and saved there, wherein by way of the marking (79) of the blanket-cylinder sleeve (41) the characteristic data (72) are associated with the respective blanket-cylinder sleeve (41).

24. A system according to one of claims 1 to 4, **characterised in that** the characteristic data (34) of the blanket-cylinder sleeve (2) are filed on a further electronic memory device (7) that is arranged on the blanket-cylinder sleeve (2) and can be read from this memory device (7) into the electronic memory device (3) upon storage.

25. A system according to claim 24, **characterised in that** by means of a data-exchange unit (6) the characteristic data (34) can be read from the further electronic memory device (7) into the electronic memory device (3), and new characteristic data (33) and/or amended characteristic data (33) and/or data (30) can be written from the electronic memory device (3) onto the further electronic memory device (7) and saved.

26. A system according to one of claims 24 or 25, **characterised in that** by means of a data-exchange unit (13; 21) arranged in printing units (15 to 18; 23 to 26) the characteristic data (34) can be read from the further electronic memory device (7) into a computing and memory device (8; 10), and new characteristic data (33) and/or amended characteristic data (33) can be written from the computing and memory device (8; 10) onto the further electronic memory device (7) and saved.

27. A system according to one of claims 24 to 26, **characterised in that** the further electronic memory device (7) serves as a means to bring about a data exchange between the printing units (15 to 18; 23 to 26) and the device (1), wherein the data exchange is effected by means of the further electronic memory device (7) between the computing and memory device (8; 10) and the electronic memory device (3).

28. A system according to one of claims 1 to 4 or 24 to 27, **characterised in that** the electronic memory device (3) is integrated into at least one of the computing and memory devices (8; 10).

29. A system according to one of claims 1 to 4 or 24 to 28, **characterised in that** a transporting device (37) renders possible transportation of the blanket-cylinder sleeve (2), which can be removed from the device (1), to the printing unit (15 to 18; 23 to 26) and/or the printing machine (9; 11).

30. A system according to one of claims 1 to 4 or 24 to 29, **characterised in that** a device for characterising (39) the removable blanket-cylinder sleeves (2) is arranged on the device (1).

31. A system according to one of claims 1 to 4 or 24 to 30, **characterised in that** data concerning the damage status (30) of the blanket-cylinder sleeve (2) can be determined by means of a device (28), wherein the data concerning the damage status (30) are transmitted to one of the memory devices (3; 8; 10).

32. A system according to one of claims 1 to 4 or 24 to 30, **characterised in that** the data concerning the damage status (30) of the blanket-cylinder sleeve can be determined manually by a printer operating the printing machine (9; 11) and can be input into a manual input unit (27), wherein the data concerning the damage status (30) are transmitted by means of the manual input unit (27) to one of the memory devices (3; 8; 10).

33. A system according to one of claims 1 to 4 or 24 to 32, **characterised in that** orders for new blanket-cylinder sleeves (2) can be automatically triggered and implemented by means of the characteristic data (34) that are filed in the electronic memory device (3).

34. A system according to one of claims 1 to 4 or 24 to 33, **characterised in that** statistics concerning the probable failure of blanket-cylinder sleeves (2) can be calculated by means of the characteristic data (34) that are filed in the electronic memory device (3).

35. A method for storing sleeves that are equipped with a further electronic memory device (7), **characterised in that** characteristic data (33) are applied to the memory device (7) of the sleeve that is realized as a blanket-cylinder sleeve (2) for offset printing and is still located in a printing unit (15 to 18; 23 to 26), and then upon storage in a device (1) the characteristic data (33; 34) are transmitted to an electronic memory device (3) of the device (1).

36. A blanket-cylinder sleeve for use in a system according to one of the preceding claims having a further electronic memory device (7'), **characterised in that** it is arranged in the non-printing edge region of the rubber layer (85).

37. A system according to one of claims 12 to 34, **characterised in that** the data-exchange unit (6'; 13'; 21') communicates with a computing and memory unit (3'; 8'; 10') in which characteristic data (33'; 34') can be calculated.

38. A system according to one of claims 12 to 34, **characterised in that** the data-exchange unit (6'; 13'; 21') communicates with the machine control of a printing machine.

39. A system according to one of claims 1 to 22, **characterised in that** the electronic memory device (3) has an interface (90) that is accessible from external point (E₁).

40. A system according to claim 39, **characterised in that** the characteristic data (34) that are filed in the electronic memory device (3) can be retrieved from the external point (E₁) by way of the interface (90), and new characteristic data (34) can be transmitted into the memory device (3) by way of the interface (90) and saved.

41. A system according to one of claims 1 to 4 or 24 to 34, **characterised in that** the electronic memory device (42) has an interface (91) that is accessible from external point (E₂).

42. A system according to claim 41, **characterised in that** the characteristic data (72) that are filed in the electronic memory device (42) can be retrieved from the external point (E₂) by way of the interface (91), and new characteristic data (72) can be transmitted into the memory device (42) by way of the interface (91) and saved.

## Revendications

1. Système de gestion de manchons d'impression comportant :
- des manchons réalisés sous la forme de manchons cylindriques en caoutchouc (2, 41) pour l'impression offset, et
- un dispositif (1, 40) pour le stockage de manchons d'une rotative d'impression (9, 11, 48, 50) avec un dispositif électronique de stockage (3, 42) pour introduire, stocker et gérer les données caractéristiques (34, 72) de chaque manchon,
système dans lequel
- un ensemble d'emplacements de stockage (5, 44) sont prévus pour stocker les manchons,
- lors de l'introduction de chaque manchon (2, 41) dans un emplacement de stockage (5, 44), les données caractéristiques (34, 72) du manchon (2, 41) sont enregistrées dans un dispositif de mémoire (3, 42), et
- chaque manchon est sélectionné et prélevé selon les données prédéfinies (36, 75).

2. Système selon la revendication 1,
**caractérisé en ce que**
les données caractéristiques (34, 72) se composent de données caractérisant individuellement les manchons cylindriques en caoutchouc (2, 41) et/ou les données de fonctionnement et/ou les données concernant l'état d'endommagement (30, 69).

3. Système selon la revendication 1 ou 2,
**caractérisé en ce que**
les emplacements de stockage (5, 44) des manchons cylindriques en caoutchouc (2, 41) sont juxtaposés et/ ou superposés et/ ou les uns derrière les autres et/ ou en circulation et/ ou mobiles.

4. Système selon la revendication 3,
**caractérisé en ce que**
chaque emplacement de stockage (5, 44) peut être conduit dans une position d'entrée ou de sortie de stockage (4, 43).

5. Système selon l'une des revendications 1 à 4,
**caractérisé en ce que**
le manchon cylindrique en caoutchouc (41) comporte une référence (79) à l'aide de laquelle les données caractéristiques (72) sont associées à chaque manchon cylindrique en caoutchouc (41) et les données caractéristiques (72) sont enregistrées dans le dispositif de mémoire électronique (42) lors de l'entrée en stockage.

6. Système selon l'une des revendications 1 à 4,
**caractérisé en ce qu'**
un numéro d'identité (73) est prévu dans un autre dispositif de mémoire électronique (46) du manchon cylindrique en caoutchouc (2) à l'aide duquel les données caractéristiques (72) sont associées à chaque manchon cylindrique en caoutchouc (41), et
les données caractéristiques (72) sont enregistrées dans le dispositif de mémoire électronique (42) au moment de l'entrée en stockage.

7. Système selon la revendication 6,
**caractérisé en ce que**
lors de l'entrée en stockage le numéro d'identité (73) est enregistré par l'autre dispositif de stockage électronique (46) dans le dispositif de stockage électronique (42).

8. Système selon l'une des revendications 1 à 4,
**caractérisé en ce que**
les données caractéristiques (72) du manchon cylindrique en caoutchouc (41) sont enregistrées dans l'autre dispositif électronique de mémoire (46) et lors de l'entrée en stockage, les données caractéristiques (72) sont enregistrées par l'autre dispositif de stockage électronique (46) dans le dispositif de stockage électronique (42).

9. Système selon la revendication 5,
**caractérisé en ce qu'**
à l'aide d'un appareil de lecture de données (45) ou d'un scanner (80) installé près des emplacements de stockage (5, 44), on enregistre la référence (79) dans le dispositif de mémoire électronique (3) et on échange les données caractéristiques (72) associées à la référence (40) et/ou les données caractéristiques modifiées (72) et/ou les données (69) entre les dispositifs de mémoire (42, 47, 49) et on les inscrit dans le dispositif de mémoire respectif (42, 47, 49).

10. Système selon la revendication 6,
**caractérisé en ce qu'**
à l'aide d'un appareil de lecteur de données (45) prévu au niveau des emplacements de stockage (5, 44), on lit le numéro d'identité (73) des autres dispositifs de mémoire électronique (46) dans le dispositif de mémoire électronique (42), et on échange les données caractéristiques (72) associées au numéro d'identité (73) et/ou les données caractéristiques modifiées (72) et/ou les données (69) entre les dispositifs de mémoire (46, 47, 49) et on les inscrit et on les enregistre dans le dispositif de mémoire correspondant (46, 47, 49).

11. Système selon la revendication 9 ou 10,
**caractérisé en ce que**
les appareils de lecture de données (45, 52, 60) sont prévus dans et/ou sur les groupes d'impression (54, 55, 56, 57, 62, 63, 64, 65) et le dispositif (1).

12. Système selon la revendication 11,
**caractérisé en ce que**
les appareils de lecture de données (45, 52, 60) sont des appareils d'échange de données et les données caractéristiques (72) sont échangées et enregistrées dans les dispositifs de mémoire (42, 47, 49).

13. Système selon l'une des revendications 6, 7, 8, 10, 11 ou 12,
**caractérisé en ce que**
l'autre dispositif de mémoire électronique (46) sert de moyen de transmission de données et d'échange de données entre les dispositifs de calcul et de mémoire (47, 49) et le dispositif de mémoire électronique (42).

14. Système selon l'une des revendications 1 à 12,
**caractérisé en ce qu'**
on intègre le dispositif de mémoire électronique (42) dans au moins l'un des dispositifs de calcul et de mémoire (47, 49).

15. Système selon l'une des revendications 1 à 13,
**caractérisé en ce qu'**
on intègre le dispositif de mémoire électronique (42) et les dispositifs de calcul et de mémoire (47, 49) dans au moins une unité de mémoire (81).

16. Système selon l'une des revendications 1 à 15,
**caractérisé en ce qu'**
un dispositif de transport (76) permet le transport du manchon cylindrique en caoutchouc (41) prélevé dans le dispositif (40) vers le groupe d'impression (54-57; 62-65) et/ou la machine d'impression (48, 50).

17. Système selon l'une des revendications 1 à 16,
**caractérisé en ce que**
le dispositif (40) comporte un dispositif pour référencer (78) les manchons cylindriques en caoutchouc (41) susceptibles d'être prélevés.

18. Système selon l'une des revendications 2 à 17,
**caractérisé en ce qu'**
on détermine les données concernant l'état d'endommagement (69) du manchon cylindrique en caoutchouc (41) à l'aide d'un dispositif (67).

19. Système selon l'une des revendications 2 à 17,
**caractérisé en ce qu'**
on détermine les données concernant l'état d'endommagement (69) du manchon cylindrique en caoutchouc (41) manuellement par l'opérateur qui travaille sur la machine d'impression (48, 50), et on l'introduit dans un appareil d'entrée manuel (66).

20. Système selon la revendication 18 ou 19,
**caractérisé en ce que**
les données concernant l'état d'endommagement (69) sont transmises à des dispositifs de mémoire (42, 47, 49).

21. Système selon l'une des revendications 1 à 20,
**caractérisé en ce que**
les données caractéristiques (72) enregistrées dans le dispositif de mémoire électronique (42) sont déclenchées et exécutées automatiquement pour commander de nouveaux manchons cylindriques en caoutchouc (41).

22. Système selon l'une des revendications 1 à 21,
**caractérisé en ce que**
les données caractéristiques (72) enregistrées dans le dispositif de mémoire électronique (42) permettent la tenue de statistiques sur la probabilité de défaillance de manchons cylindriques en caoutchouc (41).

23. Procédé de stockage de manchons équipés d'une référence (79),
**caractérisé en ce que**
les données (72) des manchons conçus comme manchons cylindriques en caoutchouc (41) pour l'impression offset, sont transmises par un dispositif de calcul et de mémoire (47, 49) d'une rotative d'impression (48, 50) à un dispositif de mémoire électronique (42) d'un dispositif (40) pour y être stockées et enregistrées,
la référence (79) du manchon cylindrique en caoutchouc (41) comportant les données caractéristiques (72) du manchon cylindrique en caoutchouc (41), respectif.

24. Système selon l'une des revendications 1 à 4,
**caractérisé en ce que**
les données caractéristiques (34) du manchon cylindrique en caoutchouc (2) sont prévues sur un autre dispositif électronique de mémoire (7) prévu sur le manchon cylindrique en caoutchouc (2) et lors de l'entrée en stockage, les données sont enregistrées à partir de ce dispositif de mémoire (7) dans l'autre dispositif de mémoire (3).

25. Système selon la revendication 24,
**caractérisé en ce qu'**
à l'aide d'un appareil d'échange de données (6), on enregistre les données caractéristiques (34) de l'autre dispositif de mémoire électronique (7) dans le dispositif de mémoire électronique (3) et des nouvelles données caractéristiques (33) et/ou des données caractéristiques modifiées (33) et/ou des données (30) sont inscrites et enregistrées par le dispositif de mémoire électronique (3) dans l'autre dispositif de mémoire électronique (7).

26. Système selon la revendications 24 ou 25,
**caractérisé en ce qu'**
à l'aide d'un appareil d'échange de données (13, 21) dans les groupes d'impression (15-18; 23-26), on enregistre les données caractéristiques (34) à partir de l'autre dispositif de mémoire électronique (7) dans un dispositif de calcul et de mémoire (8, 10) et de nouvelles données caractéristiques (33) et/ou des données caractéristiques modifiées (33) sont inscrites et enregistrées par le dispositif de calcul et de mémoire (8, 10) dans l'autre dispositif de mémoire électronique (7).

27. Système selon l'une des revendications 24 à 26,
**caractérisé en ce que**
l'autre dispositif de mémoire électronique (7) sert de moyen pour réaliser un échange de données entre les groupes d'impression (15-18; 23-26) et le dispositif (1),
l'échange des données se faisant à l'aide de l'autre dispositif de mémoire électronique (7) entre le dispositif de calcul et de mémoire (8, 10) et le dispositif de mémoire électronique (3).

28. Système selon l'une des revendications 1 à 4 ou 24 à 27,
**caractérisé en ce que**
le dispositif de mémoire électronique (3) est intégré dans au moins l'un des dispositifs de calcul et de mémoire (8, 10).

29. Système selon l'une des revendications 1 à 4 ou 24 à 28,
**caractérisé par**
un dispositif de transport (37) permettant le transport du manchon cylindrique en caoutchouc (2) extractible du dispositif (1) vers le groupe d'impression (15-18; 23-26) et/ou la machine d'impression (9, 11).

30. Système selon l'une des revendications 1 à 4 ou 24 à 29,
**caractérisé par**
un dispositif pour caractériser (39) les manchons cylindriques en caoutchouc (2), extractibles installé sur le dispositif (1).

31. Système selon l'une des revendications 1 à 4 ou 24 à 30,
**caractérisé en ce qu'**
on détermine les données concernant l'état d'endommagement (30) du manchon cylindrique en caoutchouc (2) à l'aide d'un dispositif (28), et les données concernant l'état d'endommagement (30) sont transmises à l'un des dispositifs de mémoire (3, 8, 10).

32. Système selon l'une des revendications 1 à 4 ou 24 à 30,
**caractérisé en ce qu'**
un imprimeur travaillant sur la machine d'impression (9, 11) détermine les données de l'état d'endommagement (30) des manchons cylindriques en caoutchouc et les introduit dans un appareil d'entrée, manuel (27) qui transmet les données concernant l'état d'endommagement (30) à l'un des dispositifs de mémoire (3, 8, 10).

33. Système selon l'une des revendications 1 à 4 ou 24 à 32,
**caractérisé en ce que**
les données caractéristiques (34) enregistrées dans l'autre dispositif de mémoire (3) déclenchent et exécutent automatiquement la commande de nouveaux manchons cylindriques en caoutchouc (2).

34. Système selon l'une des revendications 1 à 4 ou 24 à 33,
**caractérisé en ce qu'**
à l'aide des données caractéristiques (34) enregistrées dans le dispositif de mémoire électronique (3), on calcule une statistique concernant la probabilité de défaillance des manchons cylindriques en caoutchouc (2).

35. Procédé de stockage de manchons équipés d'un autre dispositif de mémoire électronique (7),
**caractérisé en ce qu'**
on applique des données caractéristiques (33) au dispositif de mémoire (7) du manchon cylindrique en caoutchouc (2), d'impression offset qui se trouve encore dans le groupe d'impression (15-18; 23-26),
les données caractéristiques (33, 34) étant ensuite transmises à un dispositif de mémoire électronique (3) du dispositif (1) lors de l'entrée en stockage dans le dispositif (1).

36. Manchon cylindrique en caoutchouc utilisable dans un système selon l'une des revendications précédentes comportant un autre dispositif de mémoire électronique (7'),
**caractérisé en ce que**
l'autre dispositif de mémoire électronique (7') se trouve dans la zone marginale non imprimée de la couche en caoutchouc (85).

37. Système selon l'une des revendications 12 à 34,
**caractérisé en ce que**
l'appareil d'échange de données (6', 13', 21') est relié à une unité de calcul et de mémoire (3', 8', 10') dans laquelle se calculent les données caractéristiques (33', 34').

38. Système selon l'une des revendications 12 à 34,
**caractérisé en ce que**
l'appareil d'échange de données (6', 13', 21') est en liaison avec la commande d'une machine d'impression.

39. Système selon l'une des revendications 1 à 22,
**caractérisé en ce que**
le dispositif de mémoire électronique (3) comporte une interface (90) accessible à partir d'un point externe (E₁).

40. Système selon la revendication 39,
**caractérisé en ce que**
les données caractéristiques (34) enregistrées dans le dispositif de mémoire électronique (3) peuvent être appelées du point externe (E₁) à travers l'interface (90) et de nouvelles données caractéristiques (34) concernant l'interface (90) peuvent être transmises et enregistrées dans le dispositif de mémoire (3).

41. Système selon l'une des revendications 1 à 4 ou 24 à 34,
**caractérisé en ce que**
le dispositif de mémoire électronique (42) comporte une interface (91) accessible d'un point externe (E₂).

42. Système selon la revendication 41,
**caractérisé en ce que**
les données caractéristiques (72) enregistrées dans le dispositif de mémoire électronique (42), peuvent être appelées par le point externe (E₂) à travers l'interface (91) et de nouvelles données caractéristiques (72) peuvent être transmises et enregistrées dans le dispositif de mémoire (42) en passant par l'interface (91).
